(19) Europäisches Patentamt

European Patent Office

Office européen des brevets

(11) EP 0 488 297 B1

(12) **EUROPEAN PATENT SPECIFICATION**

(45) Date of publication and mention of the grant of the patent:
**02.02.2000 Bulletin 2000/05**

(51) Int. Cl.[7]: **G06F 7/02**, G06F 17/30

(21) Application number: **91120412.1**

(22) Date of filing: **28.11.1991**

(54) **Symbol string search apparatus and system**

Zeichenfolgensuchgerät und -system

Appareil et système pour la recherche de séquences de symboles

(84) Designated Contracting States:
**DE GB**

(30) Priority: **30.11.1990 JP 32889390**

(43) Date of publication of application:
**03.06.1992 Bulletin 1992/23**

(73) Proprietors:
• **HITACHI, LTD.**
  **Chiyoda-ku, Tokyo (JP)**
• **Hitachi Maxell Ltd.**
  **Osaka-fu (JP)**

(72) Inventors:
• **Akizawa, Mitsuru**
  **32, Koyasumachi-2-chome, Hachioji-shi (JP)**
• **Noguchi , Kouki**
  **217, Higashikoigakubo-1-chome, Kokubunji (JP)**
• **Hayashi, Takehisa**
  **Sagamihara-shi (JP)**
• **Kato, Kanji**
  **Tokorozawa-shi (JP)**
• **Matsushima,Hitoshi**
  **Tachikawa-shi (JP)**

(74) Representative:
**Strehl Schübel-Hopf & Partner**
**Maximilianstrasse 54**
**80538 München (DE)**

(56) References cited:
**GB-A- 2 200 228**

• **IEE PROCEEDINGS E. COMPUTERS & DIGITAL TECHNIQUES vol. 136, no. 5, September 1989, STEVENAGE GB pages 351 - 356 H. ZEIDLER 'Content-addressable mass memories'**
• **ELEKTRONISCHE RECHENANLAGEN - MIT COMPUTER PRAXIS vol. 26, no. 4, August 1984, MUNCHEN DE pages 179 - 185 M. MALMS ET AL. 'Leistungssteigerung durch ein inhaltadressierbares Speichersystem'**
• **PROCEEDINGS OF THE IEEE 1988 CUSTOM INTEGRATED CIRCUITS CONFERENCE (CICC '88), 16-19 MAY 1988, ROCHESTER, NY, USA. 1988, IEEE, NEW YORK pages 2161 - 2164 H. YAMADA ET AL. 'Real-time String Search Engine LSI for 800-Mbit/sec LANs'**
• **PROCEEDINGS OF CONPAR. CONFERENCE PAPERS : PLENARY SESSIONS AND STREAM A. MANCHESTER, 12 - 16 SEPT. 1988. 1988, BRITISH COMPUTER SOCIETY, LONDON GB pages 155 - 165 YAN H. NG ET AL. 'mapping with no strings attached'**
• **PROCEEDINGS OF THE SPRING JOINT COMPUTER CONFERENCE; ATLANTIC CITY, N.J. 18-20 MAY 1971. 1971, AFIPS PRESS, MONTVALE N.J. pages 49 - 59 K. THURBER 'An associative processor for air traffic control'**
• **PROCEEDINGS OF THE 1989 IEEE INTERNATIONAL CONFERENCE ON COMPUTER DESIGN: VLSI IN COMPUTERS & PROCESSORS, 2-4 OCTOBER 1989, CAMBRIDGE, MA., USA. 1989, IEEE, NEW YORK, USA pages 182 - 187 B. FU ET AL. 'performance and microarchitecture of the i486 processor'**
• **TOSHIBA REVIEW no. 138, 1982, pages 29 - 32 K. DOI ET AL. 'CMOS 8-bit 1-chip microcomputer TMP80C49'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

The present invention relates to a semiconductor integrated circuit such as logical LSI, microcomputer or the like. More particularly, the present invention relates to a novel function apparatus (or module) which improves the speed of a symbol string search processing, a single-chip microcomputer which includes such an apparatus (or module) and a system which uses such a microcomputer.

As the amount of document data handled by an information processing equipment increases, demands for high-speed data search became enlarged. In a full text search in which the search of text data is made by use of not an index but an arbitrarily set keyword, it is important to make at a high speed a so-called string search or a character string search which makes a search for a keyword existing in text data.

A high-speed algorithm for search of text data for a plurality of keywords has hitherto been known and is realized by a software on a general purpose processor. However, it is difficult to ensure a practical speed in the search of a large-scale database. Recently, there are proposed high-speed techniques which use special purpose hardwares in order to obtain a sufficient search speed. One example of such techniques is disclosed in JP-A-64-42784 entitled "CHARACTER STRING COMPARE APPARATUS AND HIERARCHICAL CHARACTER STRING COMPARE SYSTEM IN THE APPARATUS".

The prior art disclosed by the JP-A-64-42784 concerns a special purpose LSI for the use for character string search. The LSI includes a memory area for registering keywords therein and a logical circuit area for performing a search processing by comparing the keywords and text data character by character. The plurality of keywords are registered in the memory area and the text data is searched for those keywords. The number of keywords and the keyword length, which can be set simultaneously, are restricted by the size of the memory area. The above prior art teaches a method and means by which many keywords can be registered by saving the memory area.

More especially, each keyword is symbolized by hierarchical division thereof into short character strings. In the case where a plurality of analogous composite words are set as keywords, that is, in the case where the same character string pattern appears in a plurality of keywords, it is possible to efficiently utilize the memory area since a divisional character string pattern can be used in common. Accordingly, the number of keywords increases which can be registered. However, since the hierarchical symbolization is made, a procedure for making a matching with the original keyword becomes necessary. This causes the increase in a processing time. Also, since the overall search processing is performed by the LSI for character string search, there is involved a problem that the upper limit of the scale of a circuit, which can be formed with LSI configuration, restricts a function and the number of keywords capable of being processed and hence only the character string search within the restricted range is possible.

As mentioned, the above prior art has the problem that the search function and the number of keywords capable of being simultaneously searched out are restricted by the scale of the hardware. In a character string search, there may frequently be required a so-called approximate search function, that is, a function of searching text data even for keywords which do not exactly match with a desired keyword. Therefore, the circuit scale has a tendency to further increase. However, if the circuit scale becomes too large so that the cricuit must be LSI-configured on a plurality of chips, the merit of the LSI configuration is decreased since it is not possible to make the best use of the high-speed ability. Further, the use of the special purpose hardware requires a host CPU for controlling this hardware. This also causes the increase in the number of chips.

GB-A-2 200 228 discloses a computer including a central processing unit which is connected via buses to a read-only memory, a random access memory, input/output units and a content addressable memory, wherein the content addressable memory may be instructed to record data to seek for data matching an input group or to enable data to be read from a particular address of the memory.

IEE Proceedings-E. Computers & Digital Techniques, vol. 136, no. 5, September 1989, pages 351 to 356 describes different layouts for content addressable mass memories which allows to select words, the content of which is identical to an argument offered as an address and stored in a special search register.

Elektronische Rechenanlagen, vol. 26, no. 4, 1984, pages 179 to 185, discloses content addressable memories used for time critical search processing.

SUMMARY OF THE INVENTION

An object of the present invention is to provide a data processing apparatus which performs simple string search at high speed and with a hardware scale smaller than that in the prior art.

This object is met by a string search apparatus according to claim 1. Preferred embodiments are disclosed in the dependent claims.

In the present invention, an apparatus to improve the speed of a symbol string search such as a character string search (hereinafter referred to as a search module or the like) is provided. A CPU and the search module are bus-connected through generalized or universal address and data buses and take over their portions of a symbol string (or character string) search processing.

More particularly, the search module is connected to the CPU through the address bus and the data bus and includes function definition means for defining a funtion of the search module in accordance with a command from the CPU, data input/output means for receiving a symbol string to be searched through the data bus and outputting the result of search, search processing means for performing a search processing based on a function defined by the function definition means by use of a symbol string to be searched out which is stored in the search processing means itself and the symbol string to be searched which is inputted to the data input/output means, and condition holding means for holding data indicative of an internal condition corresponding to the result of the search processing.

In the present invention, a software processing on the CPU is fundamental in order to perform a symbol string (or character string) search or the like at a high speed. A portion of that processing is performed by the search module at a high speed, thereby improving the speed of the overall symbol string (or character string) search processing.

Generally, a symbol string (or character string) search processing includes making successive comparison or collation with text data from the top or the last of a symbol string (or character string). If a mismatching is found out in the course of comparing, the on-set position of the text data is shifted and the comparision is resumed from the compare start position of the symbol string (or character string), that is, the top or the last of the symbol string (or character string). Therefore, the frequency of compare processing at the compare start portion of the symbol string (or character string) becomes very high. The processing at this high-frequency portion is performed by the search module at a high speed and the other low-frequency portion is software-processed by the CPU. Since the high-frequency portion to be processed at a high speed is restricted to the vicinity of the compare start position of the symbol string (or character string), a relatively small scale circuit suffices for the search module. Therefore, it is also possible to integrate the search module and the CPU on the same LSI chip. Thereby, it becomes possible to provide means which searches for a symbol string (or character string) at a high speed and with a hardware scale smaller than that in the prior art.

In the present invention, the CPU and the search module are connected through generalized buses (or the address bus and the data bus) and data to be beforehand set in the search module is written by CPU. The execution of a symbol string (or character string) search processing is activated by transferring the text data to the search module. The result of comparing is outputted to a result storage in the data input/output means of the search module and is read therefrom and interpreted by the CPU.

The CPU and the search module are not connected by a special data bus but by a generalized bus.

Observed from the CPU, the search module looks as being mapped in memory address map. Therefore, the execution of a search processing and the acquisition of the result can be made easily in a procedure similar to the procedure of data transfer for a memory. Mapping at any address is possible. Therefore, in the case where the configuration of a single-chip microcomputer is employed, good matchability with another module is obtained. Also, if the CPU and the search module is integrated as a search processor on the same semiconductor chip, the speed of data transfer between the CPU and the search module is improved. Further, it becomes possible to structure an application system with a hardware scale smaller than that in the prior art.

BRIEF DESCRIPTION OF THE DRAWINGS

Fig. 1 is a block diagram for explaining the construction of a first embodiment of the present invention;
Fig. 2 is a block diagram for explaining the case where the construction of the first embodiment of the present invention is applied to another purpose;
Fig. 3 is a block diagram for explaining a more detailed embodiment of a search module shown in Fig. 1;
Fig. 4 is a diagram for explaining the address mapping of memories and control registers in the search module;
Fig. 5 is a diagram for explaining the formats of commands which define functions of the search module;
Fig. 6 is a block diagram for explaining a more detailed embodiment of data input/output means of the search module shown in Fig. 3;
Fig. 7 is a block diagram for explaining a more detailed embodiment of a path selector of the search module shown in Fig. 3;
Fig. 8 is a diagram for explaining the format of a compare control memory of the search module shown in Fig. 3;
Fig. 9 is a block diagram for explaining an embodiment of a content addressable memory of the search module shown in Fig. 3;
Fig. 10 shows a true value table for explaining the function of a compare logic for producing the result of matching in consideration of a compare condition;
Fig. 11 is a block diagram for explaining an embodiment of a compare result analyzing circuit of the search module shown in Fig. 3;
Fig. 12 is a block diagram for explaining an embodiment of a plural-hit analyzing block in the compare result analyzing circuit shown in Fig. 11;
Fig. 13 is a diagram for explaining the format of data outputted to an output register of the data input/output means of the search module shown in Fig. 3;

Fig. 14 is a diagram for explaining the format of a condition code register of a control section of the search module shown in Fig. 3;

Fig. 15 is a diagram for explaining an embodiment of input and output signals of the search module;

Fig. 16 is a block diagram for explaining an embodiment of a search processor in which the construction of the first embodiment of the present invention is integrated on one chip;

Fig. 17 is a block diagram for explaining an embodiment of a magnetic disk system which has the search processor of Fig. 16 incorporated therein and is therefore provided with a character string search function;

Figs. 18A and 18B are diagrams for comparatively explaining the operation of the conventional magnetic disk system and the operation of the inventive magnetic disk system of Fig. 17 provided with the character string search function, respectively; and

Fig. 19 is a block diagram for explaining a host CPU system which includes an interface for the magnetic disk system of Fig. 17 having the character string search function.

DESCRIPTION OF THE PREFERRED EMBODIMENTS

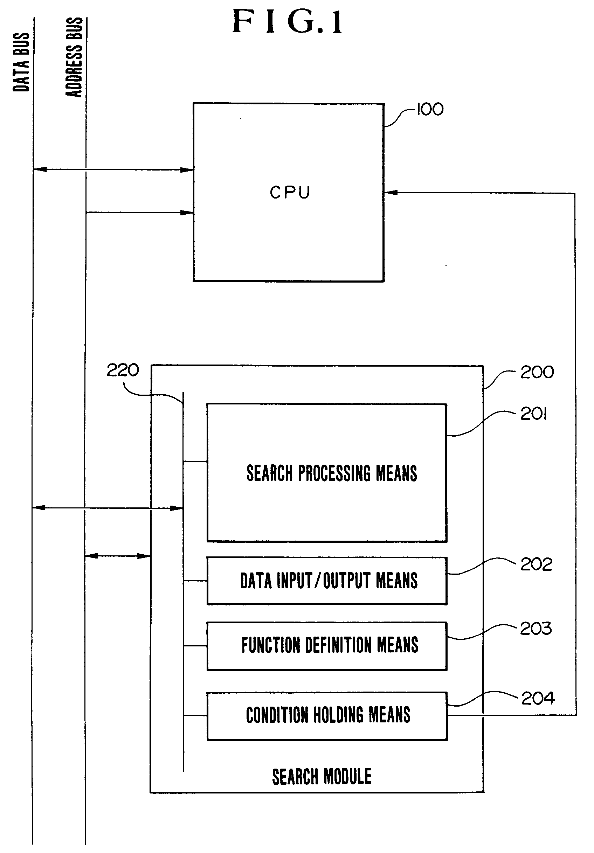

Fig. 1 shows a block diagram of an embodiment of the present invention. A CPU 100 and a search module 200, which is a multi-function module, are connected through generalized address and data buses. The search module 200 includes data input/output means 202 for data transfer from/to the CPU 100, function definition means 203 for defining the function and operation of the module, condition holding means 204 for reflecting or holding the result of a processing in the search module, and search processing means 201 the function of which is defined by the function definition means 203 and which takes in necessary data from the data input/output means 202 and delivers, to the data input/output means 202, data to be outputted as the result of a search processing performed. These components are connected to the data bus and can be accessed by addressing from the CPU 100. The operation of each component will now be explained.

A character string(s) or a partial character string(s) is beforehand prepared by a preprocessing from a keyword(s) to be searched out and is set into the search processing means 201 of the search module 200. A mode, which the search module 200 may take, is roughly classified into two modes (or a data set mode and a search mode), depending on a function defined. In this case, the search module 200 is in the data set mode. Next, a command is written from the CPU 100 into the function definition means 203 in order to select a necessary one from among a plurality of functions of the search processing means. When a character string search command is written into the function definition means 203, the search module 200 turns into a search mode and is thereby ready for a search processing.

The search processing is activated by the write of one word of text data (or character data to be searched) into the data input/output means 202. Namely, CPU 100 successively writes the text data into the data input/output means 202 of the search module 200. The text data is sent from the input/output means 202 to the search processing means 201 in which it is compared with all the beforehand set character strings (or character strings to be searched out). This processing is called a leading collation processing. If there is any character string which matches with the text data, data corresponding to that character string is outputted to the data input/output means 202. Even in the case where there is no character string which matches with the text data, data giving notice of the mismatching is outputted to the data input/output means 202. The CPU 100 makes access to the search module 200 to read and interpret data outputted to the data input/output means 202. The CPU 100 determines the next operation in accordance with the result of interpretation. Namely, if the character strings set in the search module include one which matches with the inputted text data, i.e. the matching with a compare start portion of a certain keyword. Accordingly, the CPU 100 makes a comparision with the succeeding character strings of that keyword. This processing is called a posterior collation processing. On the other hand, in the case where there is no character string which matches with the inputted text data, the CPU 100 performs no posterior collation processing or immediately writes the next text data into the data input/output means 202. The search module not only outputs the result of the search processing to the data input/output means 202 but also reflects the internal condition of the module and the result of search to the condition holding means 204. Since the content of the condition holding means 204 is directly connected to the CPU 100, it is also possible for the CPU to determine the next operation from that information.

The function of the search processing means 201 may include the designation of an exact search or an approximate search, that is, a search allowing an erroneous character(s), the designation of an anchor matching search or a non-anchor matching search, the designation of a character code length (that is, the designation of a one-byte code or a two-byte code), and so on.

In the conventional arithmetic module, a set of an operand and a command as required are transferred from a CPU. In the present invention, the CPU 100 firstly writes a command into the function definition means 203 of the search module to define one of the combinations of the above-mentioned functions of search. Next, the CPU 100 writes the text data as an operand into the data input/output means 202. Since a search processing is activated by the write of the data, the succeeding comparision of the text data with the character string(s) set in the search module can be made through the repetition of the write of data from the CPU 100 into the search module 200 and the read of data from the search module to the CPU 100. This processing can be performed in a procedure similar to the procedure of access from a CPU to a memory.

As apparent from the above, according to the embodiment of the present invention, it becomes easily possible to make the execution of a search processing and the acquisition of the result in a procedure similar to the procedure of data transfer for a memory. Also, the search module can be mapped at any address. Therefore, in the case where the configuration of a single-chip microcomputer is employed, good matchability with another module is obtained. Further, since the search module performs only a leading collation processing, it is possible to realize the search module with a small-scale hardware. Therefore, the CPU and the search module can be integrated as a search processor on the same semiconductor chip, thereby improving the speed of data transfer between the CPU and the search module. Thus, there is obtained an effect that a character string search processing by a single-chip microcomputer can be performed at a much higher speed as compared with that by the conventional apparatus.

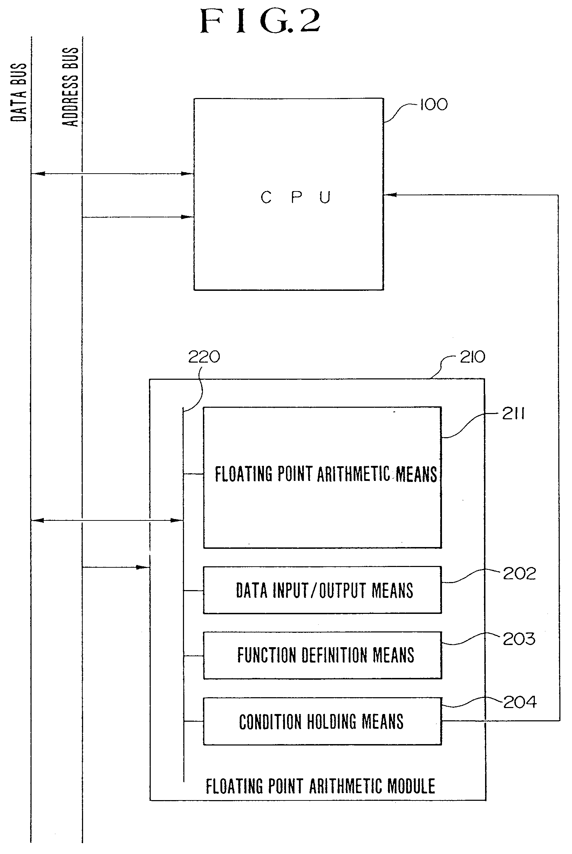

The construction of the embodiment shown in Fig. 1 is applicable to the case where a multi-function arithmetic module other than the search module is used, which is not covered by the present invention One example of such a case is shown in Fig. 2. In the example shown in Fig. 2, the construction of the embodiment shown in Fig. 1 is applied to a floating point arithmetic module 210. The floating point arithmetic module 210 includes floating point arithmetic means 211, data input/output means 202, function definition means 203 and condition holding means 204.

Firstly, a command is written from a CPU 100 into the function definition means 203 in order to define a function of the floating point arithmetic means 211. Thereby, the function of the floating point arithmetic module 210 is defined to be, for example, multiplication, division, sum-of-products arithmetic, or the like. Next, the CPU 100 writes a necessary operand(s) into the data input/output means 202. When a required number of operands for the defined arithmetic become complete, an arithmetic processing routine is activated. After the arithmetic processing, the result of arithmetic is written into the data input/output means 202 and the internal condition of the module and a condition code is written into the condition holding means 204. The CPU 100 can fetch the result of arithmetic processing by reading those information. In the case where an arithmetic processing is to be continuously executed with the same function, the arithmetic processing can be performed continuously by writing operands into the data input/output means 202 and reading the results of arithmetic processing. Namely, in the conventional method, a command is transferred each time one arithmetic processing is executed. On the other hand, in the present invention, it is sufficient to write commands into the function definition means 203 at once prior to the continuous execution of arithmetic processing. Therefore, the arithmetic processing speed is improved.

By applying the construction of the present invention shown in Fig. 1 to a multi-function arithmetic processing module as in the above embodiment, there is obtained an effect that the processing speed of a single-chip microcomputer including the multi-function arithmetic processing module is improved.

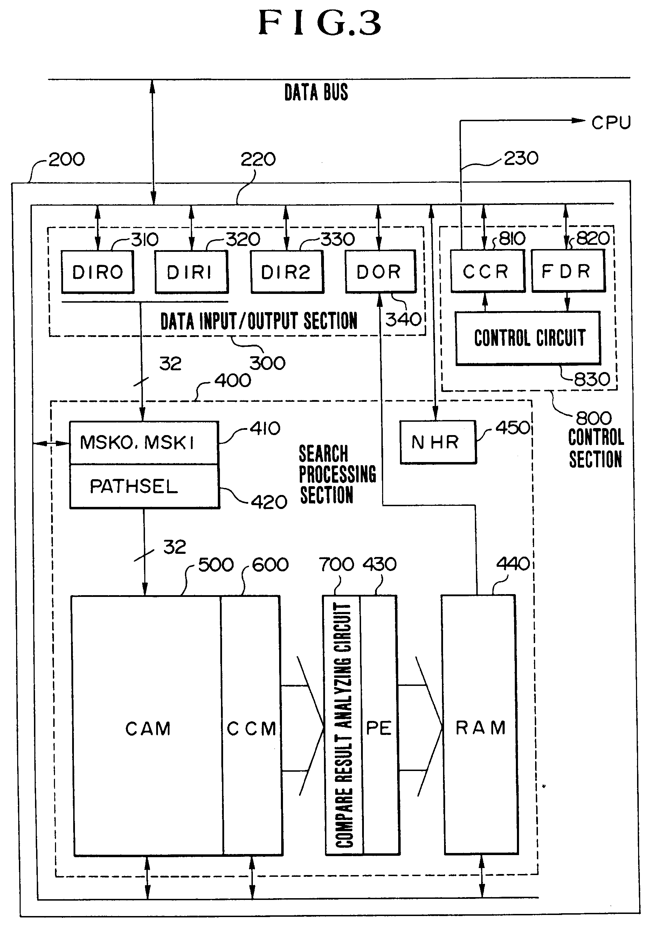

Fig. 3 shows a more detailed embodiment of the search module 200 according to the present invention. The module 200 includes a data input/output section 300, a search processing section 400 and a control section 800. Though not strictly correspond to the construction shown in Fig. 1, the data input/output section 300 corresponds to the data input/output means 202, the search processing section 400 corresponds to the search processing means 200, and the control section 800 corresponds to the function definition means 203 and the condition holding means 204. Each section is connected to a data bus through an internal bus 220 of the module 200. The bit width of a data line in the drawings is 16 bits, excepting the case where a specified designation is given. However the present embodiment can also be realized by using a data line having another different bit width.

The data input/output section 300 is composed of three data input registers (DIR0) 310, (DIR1) 320 and (DIR2) 330 and one data output register (DOR) 340. The data input register has a data shifting function. Data written in the data input register (DIR2) 330 is successively shifted to the data input register (DIR1) 320 and then to the data input register (DIR0) 310. Accordingly, the successive writing of data into the data input register (DIR2) 330 from a CPU suffices to cause the flow of data between the data input registers. The contents of the data input registers (DIR0) 310 and (DIR1) 320 are delivered as data of 32 consecutive or connected bits to the search processing section 400. The data output register (DOR) 340 receives and stores the result of search from the search processing section 400. The data input and output registers 310 to 340 are connected to the internal bus 220 so that direct access to them from the CPU is possible.

The search processing section 400 is composed of a mask register (MSK0, MSK1) 410 for masking (or designating a mask to) each bit of data sent from the data input/output section 300, a path selector (PATH SEL) 420 for making a positional interchange of data in units of a byte, a content addressable memory (CAM) 500 for storing a character string(s) or a partial character string(s) to be searched out, a compare control memory (CCM) 600 for storing a condition for comparision in the content addressable memory 500, a compare result analyzing circuit 700 for analyzing the number of words matched from the result of comparing in the content addressable memory 500, a priority encoder (PE) 430 for outputting matching signals of the words matched one by one, a RAM 440 for storing output data, and a non-hit register (NHR) 450 for storing output data when no matching is obtained.

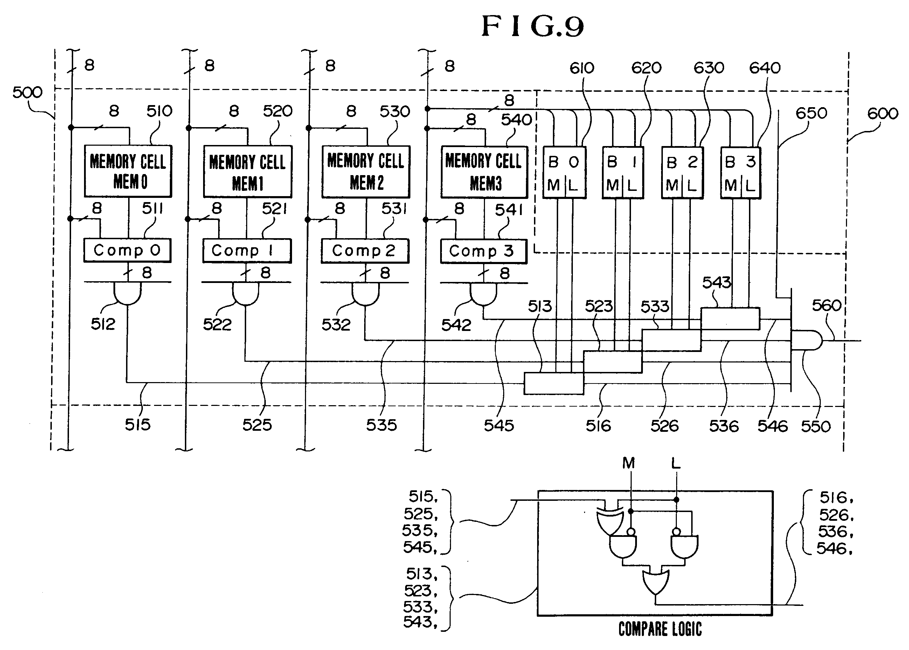

The content addressable memory 500 receives, as inputs, data from the data input/output section 300 through the mask register 410 and the path selector 420 and the content of the compare control memory 600. (Details thereof will be mentioned later on by use of Fig. 9.) The result of compare is transferred to the compare result analyzing circuit 700 and to the priority encoder 430. An output of the priority encoder 430 directly becomes an address of the RAM 440. Thereby, the content of the RAM 440 is read. The read result is transferred to the data input/output section 300 and is held by the data output register (DOR) 340 of the data input/output section 300. On the other hand, the result of analysis by the compare result analyzing circuit 700 is transferred to the control section 800. Thereby, the selection is made of whether data to be set into the data output register (DOR) 340 is the data of the non-hit register 450 or the content of the RAM 440.

The control section 800 is composed of a condition code register (CCR) 810 as condition holding means, a function definition register (FDR) 820 as function definition means, and a control circuit 830. The function definition register 820 and the condition code register 810 are connected to the internal bus of the search module 200. The function definition register 820 transfers the content thereof to the control circuit 830 to make a control for a processing sequence. On the other hand, the condition code register 810 receives data indicative of the condition of the search module during processing or after processing from the control circuit 830. This data is also delivered to the CPU directly by a condition code signal line 230. The control circuit 830 controls the data transfer and the execution of processings in the parts of the data input/output section 300 and the search processing section 400. Control lines for this purpose are omitted from Fig. 3.

The above-mentioned memory and various control registers incorporated in the search module 200 are address-mapped and can be accessed from the CPU by addressing. An address bus is omitted from Fig. 3.

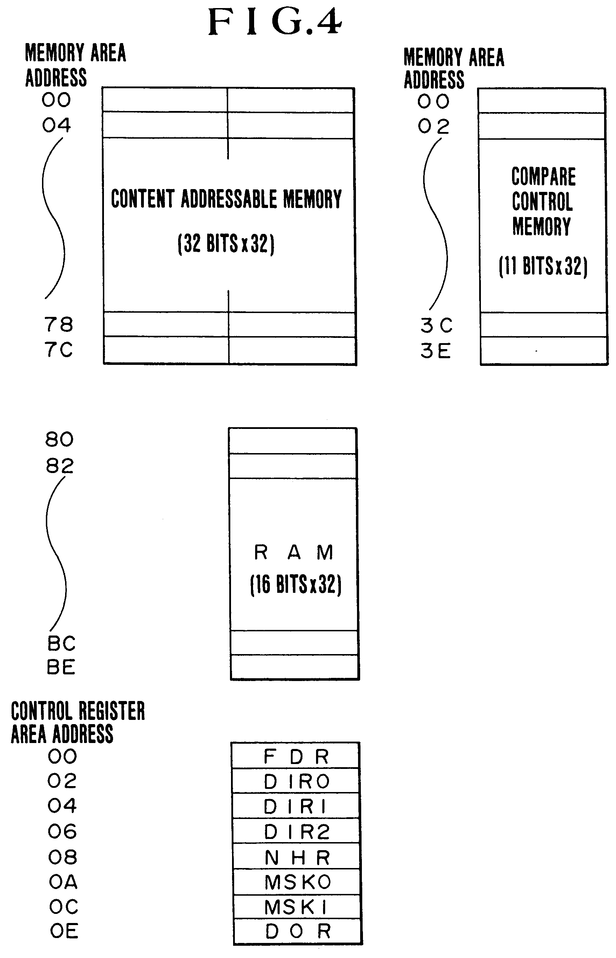

An address map is shown in Fig. 4. In the present embodiment, the content addressable memory (CAM), the RAM, the compare control memory (CCM) and each control register are constructed with 32 bits x 32 words, 16 bits x 32 words, 11 bits x 32 words and 16 bits, respectively. In the search module, the memories and the control registers have sequential address assignment from the 0-th address in individual areas. A change-over between the memory area and the control register area is made by a selection signal for selecting each area. Upon access, an address signal and an area selection signal are combined.

Though the compare control memory 600 and the content addressable memory 500 are assigned to the same address of the same area, an access change-over is made in accordance with the definition of the function of the search module 200 as will be explained later on. Namely, access to the compare control memory area becomes possible only in the case where the access to the compare control memory area is defined for the function definition register 820. In usual, the selection of a memory area results in access to the content addressable memory area. In this manner, the memory area of the search module 200 can take a construction similar to that of a usual memory. Thereby, there is obtained an effect that mapping at any address on a memory map is possible in the system level. The present embodiment can also be realized by use of another bit/word construction.

Next, the operation of the present embodiment will be explained.

A character string search is a processing for searching a text (which is a character string to be searched) for a keyword (which is a character string to be searched out). It is assumed that a character(s) to be set into the content addressable memory area of the search module and data to be set into the RAM area corresponding thereto are beforehand determined from a given keyword(s).

Firstly, as preparation for a search processing, data are set into the content addressable memory area and the RAM area of the search module 200. Also, a command to define access to the compare control memory area is set into the function definition register 820 and data is set to the compare control memory area. Thereafter, a command to define a character string search is set into the function definition register 820. The search module 200 turns into a search mode and is thereby ready for the search. Text data is written from the CPU into the data input registers (DIR0 - 2) 310 to 330 to perform the search processing.

The data input/output section 300 shown in Fig. 3 transfers the contents of the data input registers (DIR0) 310 and (DIR1) 320 to the search processing section 400 in the form of data of 32 consecutive bits. For this purpose, there may be a method in which data directly written in the data input registers (DIR0) 310 and (DIR1) 320 are transferred to the search processing section 400 as they are and a method in which data existing in the data input registers (DIR0) 310 and (DIR1) 320 are transferred to the search processing section 400 while data written in the input register (DIR2) 330 is successively shifted in a sequence of DIR2 → DIR1 → DIR0 in a state in which data are present in the data input registers (DIR0) 310 and (DIR1) 320. Either method can be designated by a specified field of the character string search command set into the function definition register 820.

The 32-bit data transferred to the search processing section 400 is masked by the mask register 410 and is then delivered to the path selector 420. However the data may not be subjected to any masking. The path selector 420 makes an interchange or replacement of the 32-bit data in bit position and in byte position. Thereby, an approximate search can be realized. But the bit position and the byte position may be kept as they are as well. The input data is transferred through the path selector 420 to the content addressable memory 500. The input data is simultaneously compared with all the characters or data which are beforehand set in the content addressable memory 500. In this case, referring to the content of the compare control memory 600, the decision of a matching or a mismatching is made in accordance with the indicated condition. One word of the compare control memory 600 has a one-to-one correspondence to one word of the content addressable memory 500, and the compare control memory 600 designates a condition for comparision with data of the content addressable memory 500 in units of one byte. The compare condition may include a positive logic condition under which a matching is determined when the set data and the input data are the same, a negative logic condition under which a matching is determined when they are different, a do not care condition under which a matching is always determined and an invalid condition under which a mismatching is always determined. In addition, the adoption/non-adoption of a search condition designated by the function definition register 820 can be designated individually. The matching/mismatching in the result of comparing with the input data is a logical AND of the results of comparing for respective bytes. If words match, the corresponding contents of the RAM 440 are successively read by the priority encoder (PE) 430 and are set into the data output register (DOR) 340. From the result of comparing in the content addressable memory 500, the compare result analyzing circuit 700 makes a decision of the presence/absence of any word matched and a decision as to whether the number of words matched is one or plural. In the case where there is no matching word the content of the non-hit register (NHR) 450 is set into the data output register (DOR) 340. Information acquired by the compare result analyzing circuit 700 is sent to the control section 800 to be used for a sequence control of the search module 200. Also, the internal condition during the search processing is set into the condition code register (CCR) 810. The condition code register (CCR) 810 is directly connected to the CPU by the dedicated bus 230 so that the CPU can refer to the CCR, as required. However the CCR can also be accessed through the generalized data bus.

Reading the content of the data output register (DOR) 340, the CPU interpretes it and takes the next action. Namely, if the matching of the text data with the set character string occurs in the search module 200, i.e the matching at a compare start position of the keyword, the CPU starts a posterior collection processing. Irrespective of the execution of the posterior collation processing, the CPU successively writes the text data into the search module 200 so that a leading collation processing is always performed by the search module 200.

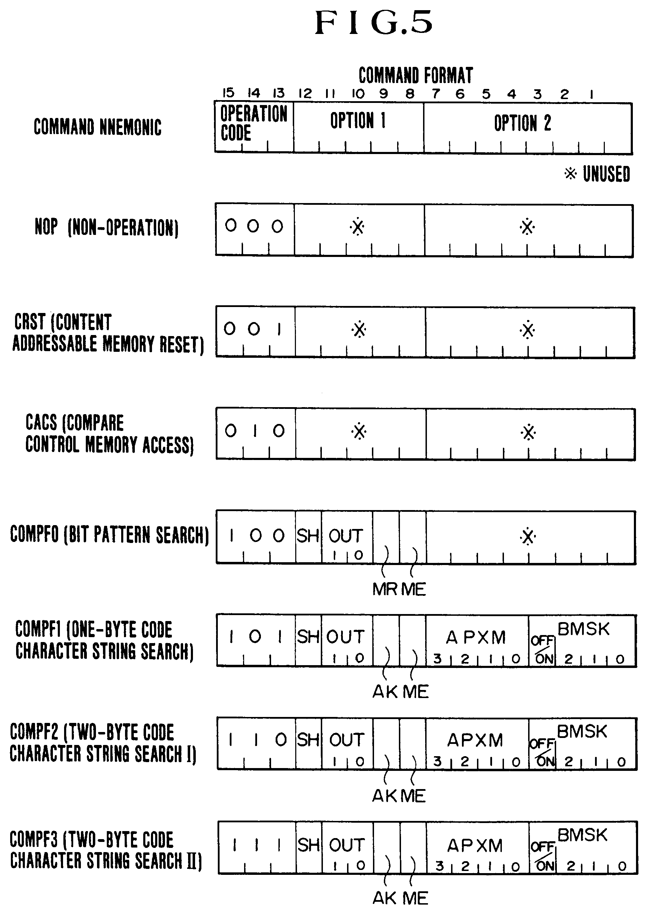

Fig. 5 shows the mnemonics and formats of commands set into the function definition register 820 in the present embodiment. The function of the search module 200 is defined by those commands. Each command shown in Fig. 5 basically takes a construction of 16 bits a word but it is of course that another construction can be employed. Each command is as follows.

1. NOP: NON-OPERATION --- The search module 200 performs nothing, and the content addressable memory area and the RAM area are made available as a usual memory area.

2. CRST: CONTENT ADDRESSABLE MEMORY (CAM) RESET --- A compare condition of the compare control memory 600 is set to the invalid condition so that the content addressable memory area is substantially initialized.

3. CACS: COMPARE CONTROL MEMORY (CCM) ACCESS --- Access to the compare control memory area is enabled in lieu of access to the content addressable memory area which is usually accessable.

4. COMPFO: BIT PATTERN SEARCH --- A search for a bit pattern is made. Data shift in the data input registers (DIR0 - 2) 310 to 330 is made in units of one bit. A masking operation is possible by referring to only the mask register. The COMPFO has the following option field.

SH: This designates the shift (ON/OFF) of input data.

OUT0: This designates the output of an interruption request signal upon matching detection (INTERRUPTION REQUEST OUTPUT ON/OFF).

OUT1: This designates the substitution (CODE MIX) or non-substitution (RAM OUT) of an internal condition code for a part of data outputted from the RAM to the DOR.

MR: This designates the reference (ON/OFF) to the mask register.

ME: In the case where multi-matching occurs, this field selects whether the advance to the next step should be taken after all the results of matching have been read from the data output register (DOR) 340 (ON) or after only the first result of matching has been read from the data output register (DOR) 340 (OFF).

5. COMPF1: ONE-BYTE CODE CHARACTER STRING SEARCH --- A search for a one-byte code character string is made. Data shift in the data input registers (DIR0 - 2) 310 to 330 is made in units of one byte. A masking operation is designated by an option field. The COMPF1 has the following option fields in addition to SH, OUT, ME fields similar to those mentioned in conjunction with the COMPF0.

AK: This selects either an anchor search (ON) or an non-anchor search (OFF).

APXM3-0: These designate independently the executions (ON/OFF) of four kinds of approximate search sequence.

BMSK3-0: These designates the setting (ON/OFF) of one-bit mask to the same bit position of each byte and that setting position.

6. COMPF2: TWO-BYTE CODE CHARACTER STRING SEARCH --- A search for a two-byte code character string is made. Data shift in the data input registers (DIR0 - 2) 310 to 330 is made in units of two bytes. A masking operation is designated by an option field. The COMPF2 has option fields quite similar to those of the COMPF1, excepting the following BMSK fields. BMSK3-0: These designate the setting (ON/OFF) of a one-bit mask to the same bit position of bytes 0 and 1 and that setting position.

7. COMPF3: TWO-BYTE CODE CHARACTER STRING SEARCH --- A search for a two-byte code character string is made. Data shift in the data input registers (DIR0 - 2) 310 to 330 is made in units of two bytes. A masking operation is designated by an option field. The COMPF3 has option fields quite similar to those of the COMPF1, excepting the following BMSK fields.

BMSK3-0: These designate the setting (ON/OFF) of a one-bit mask to the same bit position of bytes 1 and 3 and that setting position.

Next, the constructions of the respective parts of the embodiment shown in Fig. 3 will be explained together with more detailed embodiments.

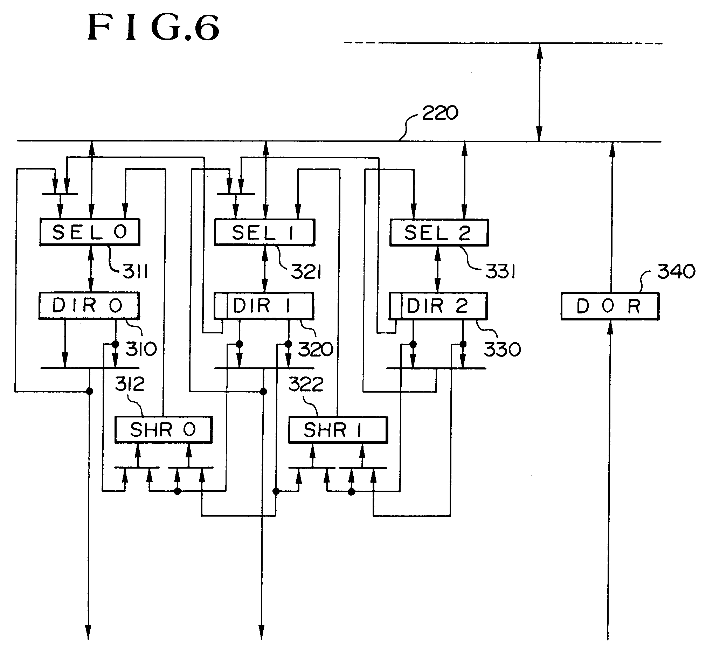

Fig. 6 shows a more detailed embodiment of the data input/output section 300. Data input registers (DIR0) 310, (DIR1) 320 and (DIR2) 330 and a data output register (DOR) 340 are connected to an internal bus 220 in the search module and are all accessable from the CPU. Buffer registers (SHR0) 312 and (SHR1) 322 and selectors (SEL0) 311, (SEL1) 321 and (SEL2) 331 for shifting are provided for data shift in the data input registers (DIR0 - 2) 310 to 330.

In the case of one-byte shift, the buffer register (SHR0) 312 forms the data input register (DIR0) 310 after one-byte shift from an upper byte of the data input register (DIR0) 310 and a lower byte of the data input register (DIR1) 320, and the buffer register (SHR1) 322 forms the data input register (DIR1) 320 after one-byte shift from a lower byte of the data input register (DIR1) 320 and an upper byte of the data input register (DIR2) 330. In the case of two-byte shift, the buffer register (SHR0) 312 forms the data input register (DIR)) 310 after two-byte shift from the data input register (DIR1) 320, and the buffer register (SHR1) 322 forms the data input register (DIR1) 320 after two-byte shift from the data input register (DIR2) 330. In the case of one-bit shift, the buffer register (SHR0) 312 forms the data input register (DIR0) 310 after one-bit shift from the most significant bit of the data input register (DIR1) 320 and the data input register (DIR0) 310, and the buffer register (SHR1) 322 forms the data input register (DIR1) 320 after one-bit shift from the most significant bit of the data input register (DIR2) 330 and the data input register (DIR1) 320.

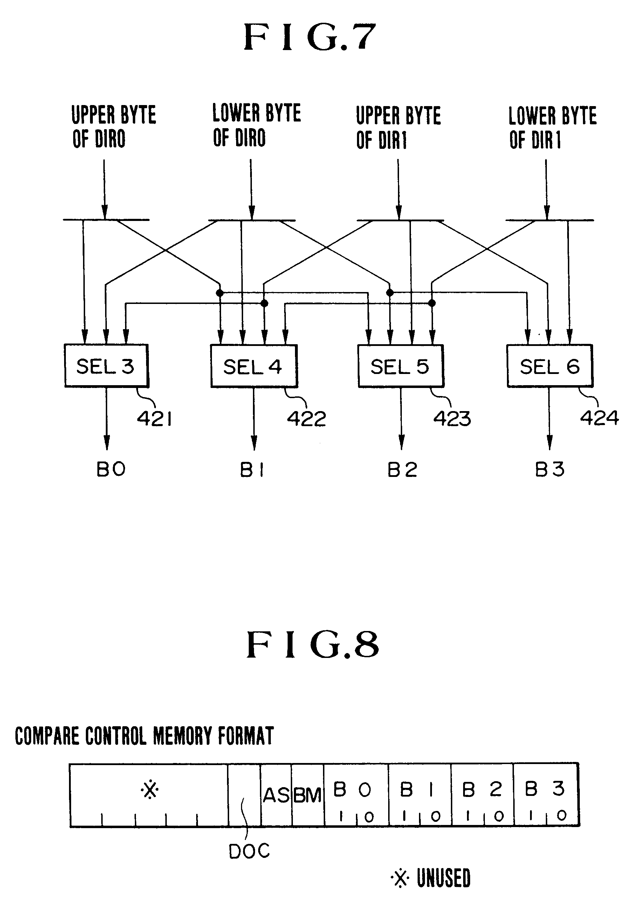

Fig. 7 shows a more detailed embodiment of the path selector 420. In order to make an approximate search of text data for a character string set in the content addressable memory area, the path selector includes selectors (SEL3 - 6) 421 to 424 for changing the byte position of four-byte data which is the contents of the DIR0 and DIR1. For example, in the case of a search for a pattern including the interchange of two adjacent characters, the four-byte data is transferred to the content addressable memory area with the positions of two any adjacent bytes among B0, B1, B2 and B3 being interchanged.

The construction shown in Fig. 7 also has byte position changing functions for both one-byte data and two-byte data. The selection of either the function for one-byte data or the function for two-byte data is made by a command which is to be set into the function definition register 820.

Fig. 8 shows an embodiment of the format of the compare control memory 600. Each word of the compare control memory 600 has a one-to-one correspondence to each word of the content addressable memory 500. When the comparision of characters or data stored in the content addressable memory 500 and text data is made, the reference to each word of the compare control memory 600 is made as a compare condition for the corresponding word of the content addressable memory 500. One word is composed of the following subfields having meanings which are given hereinbelow.

DOC: This indicates whether the content of a corresponding word of the content addressable memory area is a delimiter or a character.

AS: In the case where a character string search command is set in the function definition register 820, this subfield indicated whether or not an approximate search sequnce desig-

| | |
|---|---|
| | nated by the command should be executed. |
| BM: | In the case where a character string search command is set in the function definition register 820, this subfield indicates whether or not the reference to a bit mask designation designated by the command should be made. |
| B0 - 3: | These designate a condition for compare of characters or data stored in the content addressable memory 500 and text data in units of one byte. Each subfield designates one of the four following compare conditions by use of two bits. |
| pstv (positive logic): | A matching is determined in the case where the stored character or data and the text data are equal to each other. |
| ngtv (negative logic): | A matching is determined in the case where they are different from each other. |
| dntc (don't care): | A matching is always determined. |
| invd (invalid): | A mismatching is always determined. |

Fig. 9 shows an embodiment of the content addressable memory 500. The content addressable memory 500 makes a compare of characters or data stored therein and text data while referring to the compare control memory 600.

In Fig. 9, each of the content addressable memory 500 and the compare control memory 600 is shown to have a construction of one word, and data lines, memory cells and comparators are shown in units of eight bits. The overall content addressable memory and compare control memory includes the repetition of the shown construction. The following explanation will be made of the shown one-word construction and its operation.

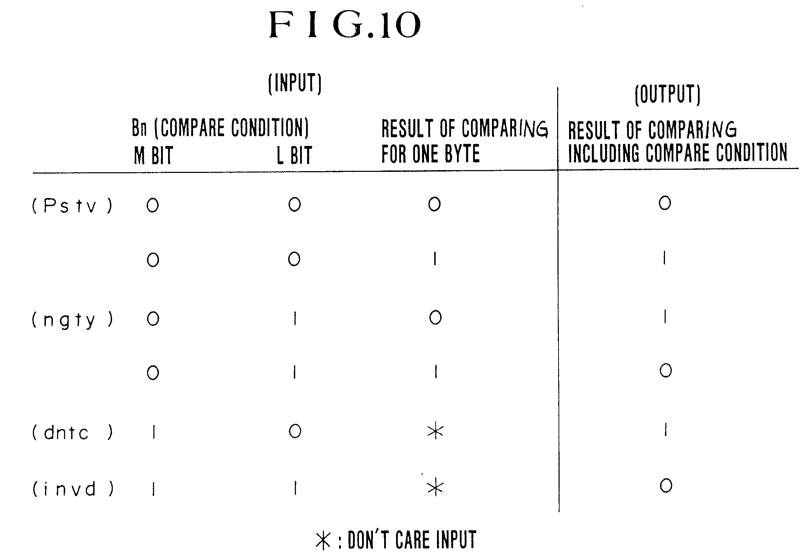

In a data set mode, the write of data into memory cells (mem0) 510, (mem1) 520, (mem2) 530 and (mem3) 540 of the content addressable memory and memory cells (B0) 610, (B1) 620, (B2) 630 and (B3) 640 of the compare control memory is possible. The connection of data paths between the data lines and the memory cells is established by the control section 800 in accordance with the content of the function definition register (FDR) 820. A character string or a partial character string is set into the content addressable memory 500, and compare conditions are set into the compare control memory 600. In a search mode, the connection of data paths between the data lines and comparators (comp0) 511, (comp1) 521, (comp2) 531 and (comp3) 541 is established. The text data on the data lines and the character string or partial character string stored in the memory cells (mem0 - 3) 510 to 540 of the content addressable memory 500 are inputted to the comparators (comp0 - 3) 511 to 541 to make a compare for each bit. The results of comparing in units of one bit are ANDed by logical AND gates 512, 522, 532 and 542 in units of one byte to produce the results 515, 525, 535 and 545 of comparing in units of one byte. For these results, compare logics 513, 523, 533 and 543 liberate the compare conditions stored in the memory cells (B0 - B3) 610 to 640 of the compare control memory. A detailed embodiment of the compare logic is shown in Fig. 9. Inputs of the compare logic include the result of comparing for one byte and a compare condition represented by two bits (indicated by M and L bits in Fig. 9). For these inputs, the results 516, 526, 536 and 546 of comparing in units of one byte taking the compare conditions into consideration are outputted in accordance with a truth table shown in Fig. 10. Finally, a logical AND of the results of comparing for the four bytes is produced by an AND gate 550. Thereby, the search-out of the character string or partial character string set in the content addressable memory is outputted as a matching signal 560. The AND gate 550 has an input for a control signal 650 which invalidates the matching signal unconditionally.

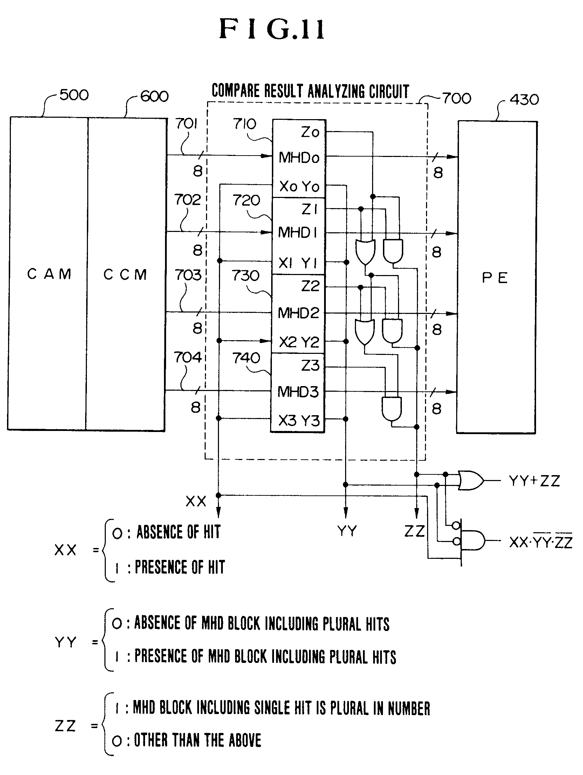

Fig. 11 shows an embodiment of the compare result analyzing circuit 700. The compare result analyzing circuit 700 receives a matching signal from the content addressable memory 500 and outputs signals XX, YY and ZZ for examining the presence/absence of hit in the matching signal and examining in the case of the presence of hit whether or not the number of hits is plural. The matching signal from the content addressable memory 500 is passed through the priority encoder (PE) 430. The construction of the present embodiment has, as a fundamental constituent unit, blocks (MHD0) 710, (MHD1) 720, (MHD2) 730 and (MHD3) 740 for making the analysis of plural hits for eight-bit matching signals 701, 702, 703 and 704. The compare result analyzing circuit 700 includes the MHD0 - 3 and logical circuits for producing the outputs XX, YY and ZZ from outputs X0 - 3, Y0 - 3 and Z0 - 3 of the MHD blocks.

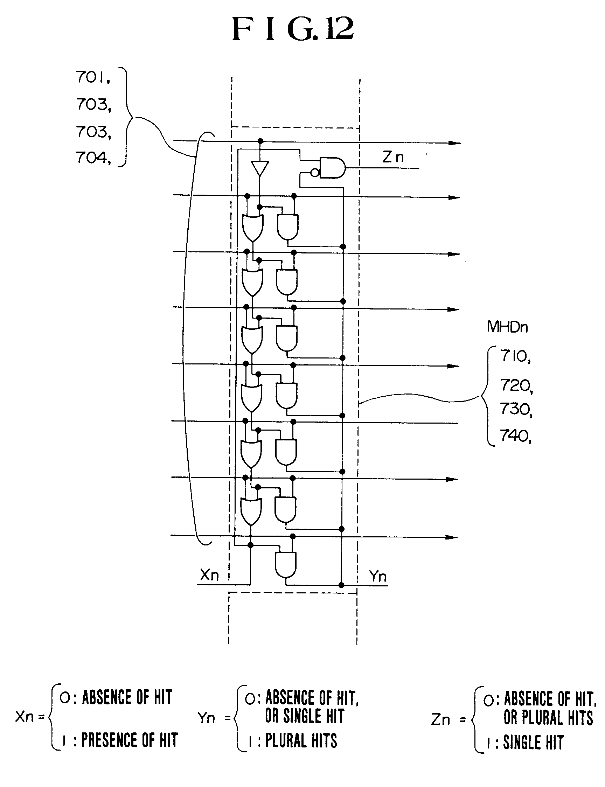

The detailed construction of the MHD is shown in Fig. 12. MHDn (n = 0 - 3) receives the matching signals 701, 702, 703 and 704 for eight words and outputs Xn which indicates the presence/absence of hit in eight bits, Yn which indicates either plural hits or the other, and Zn which indicates either a single hit or the other. XX is produced from X0 - 3, YY from Y0 - 3, and ZZ from Z0 - 3. The XX indicates the presence/absence of hit over all the matching signals, the YY indicates the presence/absence of an MHD block including plural hits, and the ZZ indicates whether or not an MHD block including a single hit is plural in number. In this manner, it becomes possible to obtain a logic YY + ZZ which indicates the presence of plural hits and a logic $XX \cdot \overline{YY} \cdot$

$\overline{ZZ}$ which indicates a single hit or the presence of only one hit. The information necessary for a sequence control is sent to the control section 800.

The present embodiment can also be realized with the other number of MHD blocks and the other number of input signals of the MHD block.

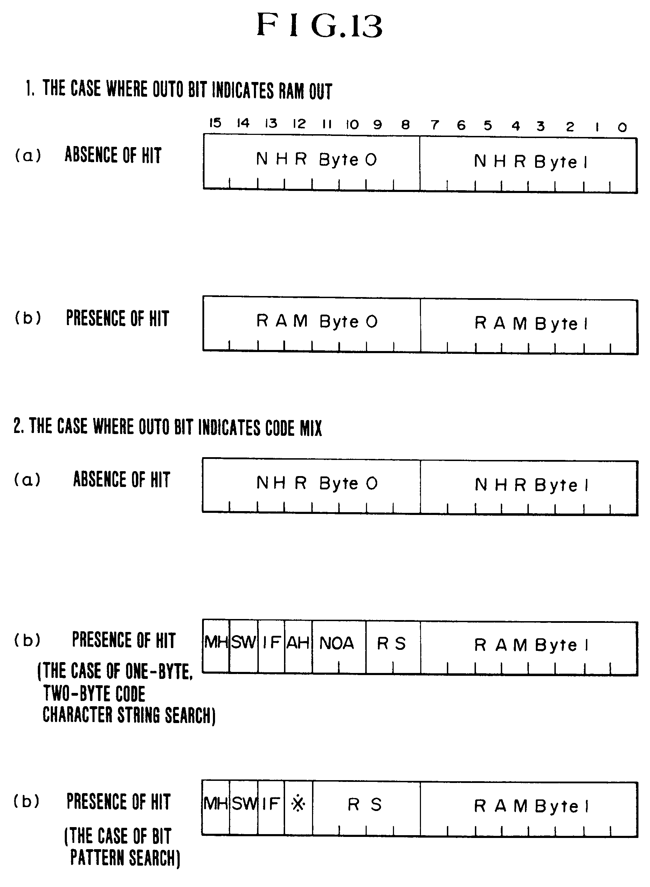

Fig. 13 shows an embodiment of the format of the data output register (DOR) 340. Depending on the value of an OUTO bit of a character string search command set in the function definition register 820, the format is classified into RAM OUT in which the content of the RAM 440 is outputted as it is and CODE MIX in which the content of a lower byte of the RAM and internal information are outputted together.

In the case of RAM OUT, the content of the non-hit register is held in the data output register if there is no hit. If there is any hit, the content of the RAM is held in the data output register. Accordingly, there is no special format.

In the case of CODE MIX, the content of the non-hit register is held in the data output register. If there any hit, an upper byte of the data output register is substituted by an internal code. The upper byte is composed of the following subfields. However, when a bit pattern search is designated, AH and NOA subfields do not exist.

MH:    This indicates either plural hits or a single hit.
SW:    This indicates that the write of data, which is not used for a search processing, was made.
IF:     This monitors the set/reset condition of an interruption request signal.
AH:    This indicates hit in an approximate character string search sequence.
NOA:  This indicates the id number of the approximate character string search sequence.
RS:    This indicates the number of times of remaining data shift in the data input registers.

According to the present embodiment, not only the read of the content of the RAM but also the read of internal information of the search module required by the CPU for a control of a search processing become possible by an address of the content addressable memory having the content matching with text data.

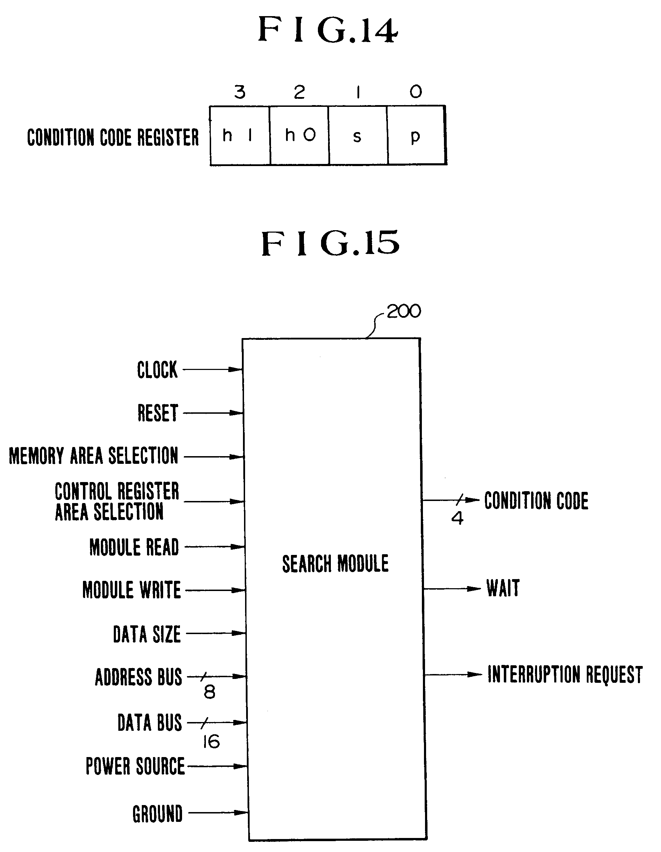

Fig. 14 shows an embodiment of the condition code register (CCR) 810 which is the condition holding means. The condition code register 810 is constructed with four bits and is composed of an h1 bit, an h0 bit, an s bit and a p bit. The h1 and h0 bits indicate the result of comparision, the s bit indicates the presence/absence of remaining text data shift in the data input registers, and the p bit indicates whether or not data written in the search module 200 immediately before is to be used for a search processing. The details thereof are as follows, depending on the content of the function definition register 820.

In the case of NOP (NON-OPERATION), (h1, h0) = 00 (fixed), and s and p are undefinite.

In the case of CRST (CONTENT ADDRESSABLE MEMORY RESET), (h1, h0) = 11 (fixed), and s and p are undefinite.

In the case of CACS (COMPARE CONTROL MEMORY ACCESS), (h1, h0) = 01 (fixed), and s and p are undefinite.

In the case of COMPFn (n = 0 - 3), that is, a bit pattern search or a character string search,

| | |
|---|---|
| (h1, h0) = 00 : | presence of single hit, |
| 01 : | absence of hit, |
| 10 : | presence of plural hits, |
| 11 : | during execution of search sequencey, |
| s = 0 : | absence of remaining shift, |
| 1 : | presence of remaining shift, |
| p = 0 : | text data written immediately before is to be used for search, |
| 1 : | text data written immediately before is not to be used for search. |

According to the present embodiment, the read of internal information of the search module required by the CPU for a control of a search processing becomes possible from the content of the condition code register. Though this internal information can also be known from the content of the data output register, the provision of the control line bus 230 for direct connection of the condition code register and the CPU makes it possible to omit register access. Accordingly, there is obtained an effect that a higher-speed search processing can be performed.

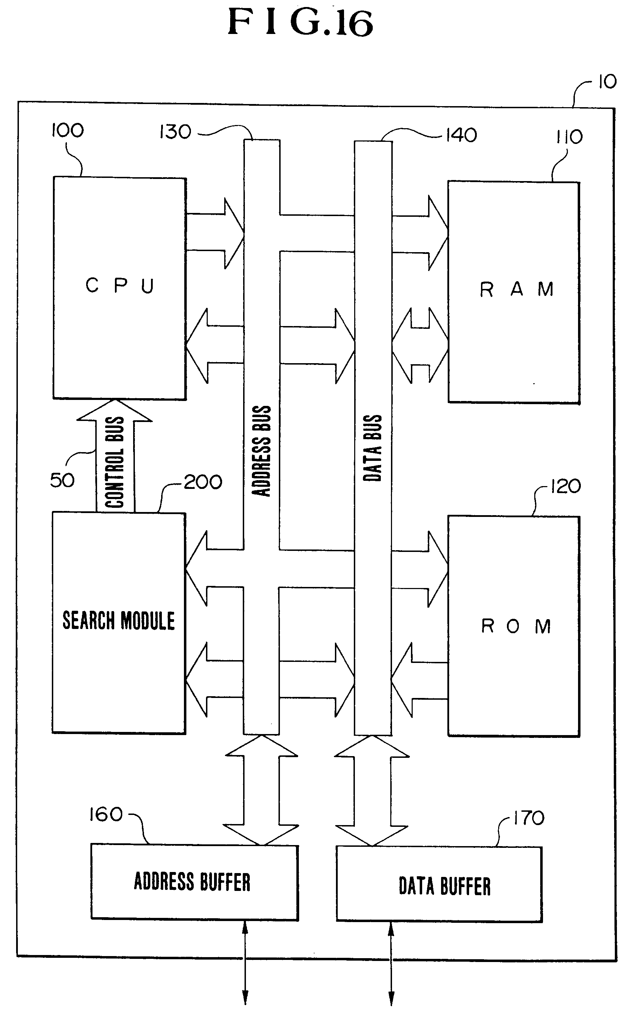

Fig. 15 shows an embodiment of input and output signals of the search module 200. The construction shown in Fig. 15 can be realized using either the positive or negative polarity of each input/output signal. A clock signal, a power source or ground may be plural in number. An address bus or a data bus can also be realized with the number of bits other than that shown.

Fig. 16 is a block diagram of a search processor (or a single-chip microcomputer) 10 which is integrated on one chip with the search module of the present invention being incorporated.

The search processor 10 includes a CPU 100, a RAM 110, a ROM 120 and a search module 200 of the present invention. These components are connected through an address bus 130 and a data bus 140. Also, the search module 200 and the CPU 100 are connected through a control bus 150 including a condition code, a wait signal and an interruption request signal. A communication with the exterior is made through an address buffer 160 and a data buffer 170. By using the search module of the present invention, there is obtained an effect that the speed of a character string search processing performed on a software in the prior art can be improved. The present embodiment can also be realized as a search processor with another construction so long as the CPU and the search module are included.

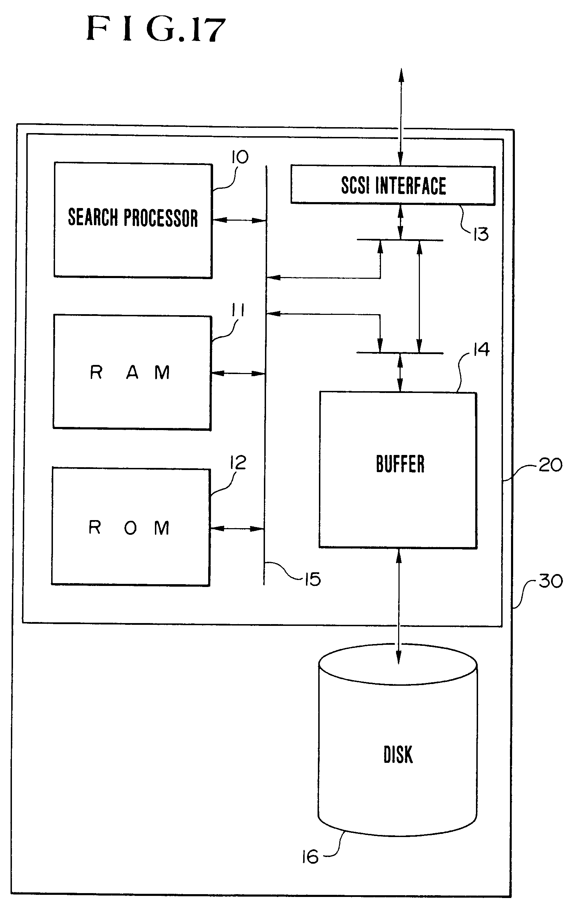

Fig. 17 shows an embodiment of a magnetic disk system 30 in which the search processor 10 of the present invention is incorporated as a controller. The present embodiment includes a disk unit 16 and a disk controller section 20. The disk controller section 20 is composed of an SCSI interface 13 for making a communication of data and commands with a host CPU, a buffer 14 for temporarily storing data, the search processor 10 used as a controller, a RAM 11 used as a work area, and a ROM 12 for storing a program and data of the search processor 10. The interface for the host CPU can also be realized with an interface other than the SCSI interface.

The present embodiment not only serves as the conventional magnetic disk system with a controller incorporated but also has a function of searching for data stored in the disk owing to the use of the search processor 10. Namely, the system is provided with a normal mode in which the system is used as a usual magnetic disk device by means of the conventional SCSI interface and a search mode in which a search function based on a string search is performed. A bit pattern, to which an SCSI command is not allotted, is used as a mode change-over command to make a change-over between both the modes. The designation for a search function is made after a search mode has been established by the mode change-over command. In the search mode, when a search processing is designated, the search processor 10 compares data of the buffer read from the disk and a character string(s) to be searched out. After the search processing has been completed, the search processor 10 informs the host CPU of whether or not there is a character string(s) matched. This can be realized, for example, in such a manner that the magnetic disk system 30 makes an interruption to the host CPU or in such a manner that the host CPU reads the result of search held by the magnetic disk system 30. After having brought the magnetic disk system into a normal mode, the host CPU read only necessary data in accordance with the result of search.

The interface between the magnetic disk system 30 and the host CPU may take a construction in which an extended interface is added to the SCSI interface. If a distinction between the normal mode and the search mode is made by the extended interface portion, the transfer of a command for mode change-over becomes unnecessary. Thereby, a further speed-up is attainable.

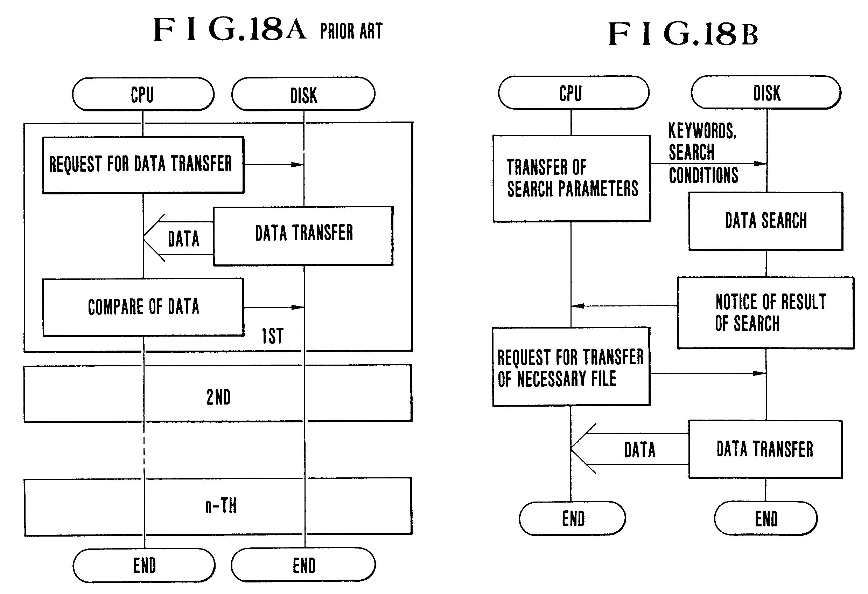

Figs. 18A and 18B comparatively show the conventional procedure and the inventive procedure for character string search from data in a disk, respectively. In the conventional procedure, data is transferred from a disk in accordance with a data transfer request from a host CPU and the host CPU performs a search processing for the data to select necessary data therefrom. In this case, if the amount of data to be searched is large, the data transfer is made plural times. In other words, there is a problem that the transfer amount of useless data becomes very large. On the other hand, in the present invention, a search processing is performed in the magnetic disk system. Therefore, it is not necessary to make useless data transfer between the disk and the host CPU which was made in the conventional system. Accordingly, data transfer at a speed higher than that in the conventional system becomes possible. This brings about an effect of improving the efficiency in utilization of the SCSI bus. Also, the present embodiment makes it possible to provide a novel function of content search which was not offered by the conventional magnetic disk system.

The construction of the present embodiment using a search processor as a controller is also applicable to a semiconductor disk system such as a RAM disk system or an optical disk system which uses a CD-ROM or the like.

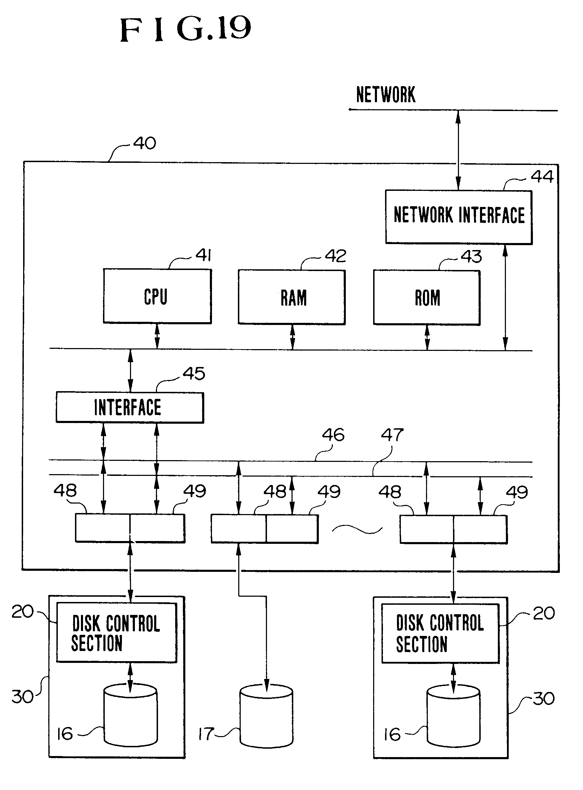

Fig. 19 shows an embodiment of a search system provided with a host CPU system 40 having an interface for the magnetic disk system shown in Fig. 17. To an internal bus are connected a CPU 41, a RAM 42, a ROM 43, interface means 44 for a network, and interface means 45 for a secondary storage system such as a magnetic disk system. The interface means 45 for the secondary storage system is also connected to an SCSI bus 46 and an extended bus 47 which are in turn connected to the secondary storage system through an SCSI interface port 48 and an extended interface port 49, respectively. When a command is transferred to the magnetic disk system 30 (as shown in Fig. 17) having a search function, the extended bus 47 is used to inform the system 30 that an extended command is concerned. Accordingly, the magnetic disk system 30 and the host CPU system 40 make, the designation of a character string search and a control for transfer of a necessary file based on the result of search, through the SCSI bus and the extended bus.

By thus using the SCSI bus and the extended bus, it becomes possible for the host CPU system 40 to possess an ordinary generalized interface as well as an interface for a magnetic disk system with an extended interface having a character string search function. In addition, if only the generalized interface portion is used, the connection to a magnetic disk 17 with the conventional SCSI interface can be made easily.

A similar construction can also be realized using a magnetic disk system in which a search processing is performed through a change-over between a normal mode and a search mode by a mode change-over command. Further, if there is not a magnetic disk system having an extended interface, the extended bus 47 and the extended interface 49 can be omitted from the host CPU system 40, thereby making the reduction in hardware scale possible.

According to the present invention, there are obtained the following effects.

A CPU and a search module are connected by not a special data bus but a generalized bus. Therefore, seeing from the CPU, the search module looks as it is address-mapped. Accordingly, the execution of a search processing and the acquisition of the result can be made easily in a procedure similar to the procedure of data transfer for a memory. Also, the search module can be mapped at any address. Therefore, in the case where the configuration of a single-chip microcomputer is employed, good matchability with another module is obtained. Further, since the search module performs only a leading collation processing, it can be realized with a small-scale hardware. Therefore, the CPU and the search module can be integrated as a search processor on the same chip, thereby improving the speed of data transfer between the CPU and the search module. As apparent from the foregoing, there is an effect that a character string search processing by a single-chip microcomputer can be performed at a much higher speed as compared with that by the conventional apparatus. Furthermore, an applied system can be structured with a hardware scale smaller than that in the prior art. Accordingly, there is also obtained an effect that a content search function, which was not provided in the prior art, can be realized by applying the search processor to a secondary storage system.

**Claims**

1. A string search apparatus (200) operable in combination with a CPU (100), said apparatus being connected to the CPU (100) via an address bus and a data bus and comprising:

function definition means (203) for defining a function of the apparatus in accordance with a command from said CPU;
data input/output means (202) for receiving data via said data bus and outputting the result of a data processing;
search processing means (201) for performing the data processing based on a function defined by said function definition means by use of data inputted to said data input/output means; and
condition holding means (204) for holding data indicative of an internal condition corresponding to the result of the data processing,
wherein a search process to be performed by the combination of the string search apparatus (200) and the CPU (100) includes a search process, performed by the string search apparatus, for a compare start portion of the data.

2. The apparatus according to claim 1, which is formed on a single semiconductor chip.

3. The apparatus according to claim 1, wherein at least said CPU (100), said apparatus (200), said address bus and said data bus are formed on a single semiconductor chip to provide a microcomputer.

4. The apparatus according to claim 3, further comprising a RAM (110) and a ROM (120) which are also formed on said single semiconductor chip to provide said microcomputer (10).

5. The apparatus according to any of claims 1 to 4 being suitable for making a decision of whether or not a symbol string to be searched out exists in a symbol string to be searched which is composed of symbols represented by codes,
wherein said search processing means (201) is capable to perform a search processing based on a function defined by said function definition means (203) by use of the symbol string to be searched out which is stored in said search processing means and the symbol string to be searched which is inputted to said data input/output means (202).

6. The apparatus according to claim 5, wherein said search processing means includes

masking means (410) for masking data in said input means (300) in units of one bit;
data path interchange means (420) for making a positional interchange of the data in said input means in units of a byte;
a content addressable memory (500) for storing beforehand a symbol string to be searched out and comparing the stored symbol string to be searched out and the symbol string to be searched which has been subjected to the positional interchange by said data path interchange means;
a compare condition memory (600) for designating a condition for compare in said content addressable memory, that is, what relationship between the symbol string to be searched and the symbol string to be searched out is determined as being a matching;
compare result analysing means (700) for analysing the number of words matched from the result of compare in said content addressable memory;
matching signal separating means (430) for outputting matching signals of the words matched one by one;
an output data memory (440) the access address of which is designated by said matching signal; and
non-hit data holding means (450) for holding data which is to be outputted to said search result output means in the case where said output data memory is not accessed;
wherein said input/output means (300) includes search result output means (340) for outputting the content of said output data memory through said data bus; and

wherein said condition holding means (810) holds an internal condition of said symbol string search apparatus.

7. The apparatus according to claim 6, wherein said input means (300) includes a first group of input means (310, 320) having a data path to said content addressable memory (500) and a second group of input means (330, 340) having no data path to said content addressable memory, and said input means successively shifts inputted data from said second group of input means to said first group of input means while being passed through each input means so that the symbol string to be searched which is stored in said first group of input means is transferred to said content addressable memory.

8. The apparatus according to claim 7, wherein the amount of shift of the symbol string to be searched in said input means groups (310 - 340) is one selected from one bit, one byte and two bytes.

9. The apparatus according to claim 7 or 8, wherein the amount of shift of the symbol string to be searched in said input means groups (310-340) is designated by a command set into said function definition means (820).

10. The apparatus according to claim 7, wherein when the symbol string to be searched which is stored in said first group of input means (310, 320) is transferred to said content addressable memory (500), the arrangement of data is changed in units of one byte.

11. The apparatus according to claim 10, wherein the manner of the change of the arrangement of the data of the symbol string to be searched which is stored in said first group of input means (310, 320), is designated by a command set into said function definition means (820).

12. The apparatus according to any of claims 6 to 11, wherein when the symbol string to be searched is written into said input means (310 - 340), a search processing sequence is activated in accordance with the setting by said function definition means (820) and either data stored in said output data memory (440) or data stored in said non-hit data holding means (450) is outputted to said search result output means (340).

13. The apparatus according to claim 12, wherein when the symbol string to be searched is written, input means for activating the search processing sequence set in said function definition means (820) is designated by a command set into said function definition means.

14. The apparatus according to any of claims 6 to 13, wherein the condition of comparison between the symbol string to be searched and the symbol string to be searched out is set in units of one word for the symbol string to be searched which is stored in said content addressable memory (500), and wherein said condition of comparing includes a condition under which the matching is determined in the case where the symbol string to be searched and the symbol string to be searched out are equal to each other, a condition under which the matching is determined in the case where they are not equal to each other, a condition under which the matching is always determined irrespective of a relationship between them, and a condition under which a mismatching is always determined irrespective of a relationship between them.

15. The apparatus according to any of claims 6 to 14, further comprising an output terminal or interface means for transferring the content of said condition holding means (810) to said CPU (100) directly.

16. The apparatus according to any of claims 6 to 15, wherein in the case where the matching between the symbol string to be searched and the symbol string to be searched out is detected, an interruption request signal is outputted.

17. The apparatus according to claim 16, wherein whether or not the interruption request signal should be outputted in the case where the matching between the symbol string to be searched and the symbol string to be searched out is detected, is designated by a command set into said function definition means (820).

18. The apparatus according to claim 16, wherein when the content of said output data memory (440) is outputted to said search result output means (340) in accordance with a signal indicative of the matching, whether or not a part of said content should be substituted by internal information of the symbol string search apparatus is designated by a command set into said function definition means (820).

19. The apparatus according to any of claims 6 to 18, wherein a mask is set to the same bit position in units of one byte or two bytes for each symbol string to be searched out which is stored in said content addressable memory (500).

20. The apparatus according to claim 19, wherein the same bit position to which the mask is set in units of one byte or two bytes for each symbol string to be searched out which is stored in said content addressable memory (500), is designated by a command set into said function definition means (820).

21. The apparatus according to any of claims 6 to 20, wherein the contents of said content addressable memory (500), said compare condition memory (600) and said output data memory (440) are accessed from said CPU (100).

22. The apparatus according to claim 1, wherein said function definition means (203) includes a first register (FDR) in which said command is set; said data input/output means includes a second register (DIR2) in which the data from said CPU is set via said address bus, and a third register (DOR) in which the result of the data processing is set; and

said first, second and third registers are address-mapped in an address space.

23. The apparatus according to claims 1 to 22, wherein commands to be supplied to said function definition means (203) from said CPU (100) includes a command directing search for one-byte data and a command directing search for two-byte data.

**Patentansprüche**

1. Zeichenfolgen-Sucheinrichtung (200) zum Betrieb in Verbindung mit einer CPU (100), wobei die Einrichtung über einen Adressenbus und einen Datenbus mit der CPU (100) verbunden ist und aufweist:

eine Funktionsdefiniereinrichtung (203) zum Definieren einer Funktion der Einrichtung entsprechend einem Befehl von der CPU, eine Daten-Ein/Ausgabeeinrichtung (202) zum Empfangen von Daten über den Datenbus und zum Ausgeben des Ergebnisses einer Datenverarbeitung, eine Suchverarbeitungseinrichtung (201) zur Durchführung der Datenverarbeitung aufgrund einer von der Funktionsdefiniereinrichtung definierten Funktion unter Verwendung von an der Daten-Ein/Ausgabeeinrichtung eingegebenen Daten, und eine Bedingungshalteeinrichtung (204) zur Aufnahme von Daten, die eine dem Ergebnis der Datenverarbeitung entsprechende interne Bedingung angeben, wobei ein von der Kombination aus der Zeichenfolgen-Sucheinrichtung (200) und der CPU (100) durchzuführender Suchvorgang einen von der Zeichenfolgen-Sucheinrichtung auszuführenden Suchvorgang für einen Vergleichs-Anfangsteil der Daten einschließt.

2. Einrichtung nach Anspruch 1, die auf einem einzelnen Halbleiterchip ausgebildet ist.

3. Einrichtung nach Anspruch 1, wobei mindestens die CPU (100), die Einrichtung (200), der Adressenbus und der Datenbus unter Bildung eines Mikrocomputers auf einem einzelnen Halbleiterchip ausgebildet sind.

4. Einrichtung nach Anspruch 3 mit ferner einem RAM (110) und einem ROM (120), die unter Bildung des Mikrocomputers (10) ebenfalls auf dem einzelnen Halbleiterchip ausgebildet sind.

5. Einrichtung nach einem der Ansprüche 1 bis 4, die sich dazu eignet zu entscheiden, ob in einer zu durchsuchenden Zeichenfolge, die aus durch Code dargestellten Symbolen besteht, eine zu suchende Symbolfolge existiert oder nicht, wobei die Suchverarbeitungseinrichtung (201) in der Lage ist, aufgrund einer von der Funktionsdefiniereinrichtung (203) definierten Funktion eine Suchverarbeitung unter Verwendung der in der Suchverarbeitungseinrichtung gespeicherten, zu suchenden Symbolfolge und der an der Daten-Ein/Ausgabeeinrichtung (202) eingegebenen zu durchsuchenden Symbolfolge durchzuführen.

6. Einrichtung nach Anspruch 5, wobei die Suchverarbeitungseinrichtung aufweist:

eine Maskiereinrichtung (410) zum Maskieren von Daten in der Eingabeeinrichtung (300) in Ein-Bit-Einheiten, eine Datenbahn-Wechseleinrichtung (420) zur Durchführung eines Positionswechsels der Daten in der Eingabeeinrichtung in Byte-Einheiten, einen nach dem Inhalt adressierbaren Speicher (500) zum vorherigen Speichern einer zu suchenden Symbolfolge und zum Vergleichen der gespeicherten, zu suchenden Symbolfolge mit der zu durchsuchenden Symbolfolge, die von der Datenbahn-Wechseleinrichtung dem Positionswechsel unterzogen wurde, einen Vergleichsbedingungsspeicher (600) zum Bezeichnen einer Bedingung für den Vergleich in dem nach dem Inhalt adressierbaren Speicher, d.h. zum Bezeichnen der als Übereinstimmung bestimmten Beziehung zwischen der zu durchsuchenden und der zu suchenden Zeichenfolge, eine Vergleichsergebnis-Analysiereinrichtung (700) zum Analysieren der Anzahl von übereinstimmenden Wörtern aus dem Vergleichsergebnis in dem nach dem Inhalt adressierbaren Speicher,

eine Übereinstimmungssignal-Separiereinrichtung (430) zum Ausgeben von Übereinstimmungssignalen der eins zu eins übereinstimmenden Wörter,

einen Ausgangsdatenspeicher (440), dessen Zugriffsadresse von dem Übereinstimmungssignal bezeichnet wird, und

eine Fehltreffer-Datenaufnahmeeinrichtung (450) zum Aufnehmen von Daten, die nicht an die Suchergebnis-Ausgabeeinrichtung auszugeben sind, falls nicht auf den Ausgangsdatenspeicher zugegriffen wird,

wobei die Ein/Ausgabeeinrichtung (300) eine Suchergebnis-Ausgabeeinrichtung (340) zum Ausgeben des Inhalts des Ausgangsdatenspeichers über den Datenbus aufweist, und

wobei die Bedingungshalteeinrichtung (810) eine interne Bedingung der Symbolfolgen-Sucheinrichtung aufnimmt.

7. Einrichtung nach Anspruch 6, wobei die Eingabeeinrichtung (300) eine erste Gruppe von Eingabeeinrichtungen (310, 320) mit einem Datenpfad zu dem nach dem Inhalt adressierbaren Speicher (500) sowie eine zweite Gruppe von Eingabeeinrichtungen (330, 340) aufweist, die keinen Datenpfad zu dem nach dem Inhalt adressierbaren Speicher haben, und wobei die Eingabeeinrichtung eingegebene Daten von der zweiten Gruppe von Eingabeeinrichtungen unter Durchlaufen jeder Eingabeeinrichtung nacheinander zu der zweiten Gruppe von Eingabeeinrichtungen verschiebt, so daß die in der ersten Gruppe von Eingabeeinrichtungen gespeicherte, zu durchsuchende Symbolfolge in den nach dem Inhalt adressierbaren Speicher überführt wird.

8. Einrichtung nach Anspruch 7, wobei das Maß der Verschiebung der zu durchsuchenden Symbolfolge in den Gruppen von Eingabeeinrichtungen (310 - 340) ein Bit, ein Byte oder zwei Bytes beträgt.

9. Einrichtung nach Anspruch 7 oder 8, wobei das Maß der Verschiebung der durchsuchenden Symbolfolge in den Gruppen von Eingabeeinrichtungen (310 - 340) von einem in die Funktionsdefiniereinrichtung (820) eingegebenen Befehl bestimmt wird.

10. Einrichtung nach Anspruch 7, wobei die zu durchsuchende Symbolfolge, die in der ersten Gruppe von Eingabeeinrichtungen (310, 320) gespeichert ist, in den nach dem Inhalt adressierbaren Speicher (500) überführt wird, und wobei die Anordnung der Daten in Ein-Byte-Einheiten geändert wird.

11. Einrichtung nach Anspruch 10, wobei die Art der Änderung in der Anordnung der Daten der zu durchsuchenden Symbolfolge, die in der ersten Gruppe von Eingabeeinrichtungen (310, 320) gespeichert ist, von einem in die Funktionsdefiniereinrichtung (820) eingegebenen Befehl bestimmt wird.

12. Einrichtung nach einem der Ansprüche 6 bis 11, wobei die zu durchsuchende Symbolfolge in die Eingabeeinrichtungen (310 - 340) geschrieben wird, eine Suchverarbeitungssequenz entsprechend der Einstellung der Funktionsdefiniereinrichtung (820) aktiviert wird und entweder in dem Ausgangsdatenspeicher (440) oder in der Fehltreffer-Datenaufnahmeeinrichtung (450) gespeicherte Daten an die Suchergebnis-Ausgabeeinrichtung (349) ausgegeben werden.

13. Einrichtung nach Anspruch 12, wobei beim Einschreiben der zu durchsuchenden Symbolfolge die Eingabeeinrichtung zum Aktivieren der in die Funktionsdefiniereinrichtung (820) eingegebenen Suchverarbeitungssequenz von einem in die Funktionsdefiniereinrichtung eingegebenen Befehl bestimmt wird.

14. Einrichtung nach einem der Ansprüche 6 bis 13, wobei die Bedingung für den Vergleich zwischen der zu durchsuchenden Symbolfolge und der zu suchenden Symbolfolge in Ein-Wort-Einheiten für die zu durchsuchende Symbolfolge, die in dem nach dem Inhalt adressierbaren Speicher (500) gespeichert ist, eingestellt wird, und wobei zu der Vergleichsbedingung eine Bedingung gehört, bei der Übereinstimmung festgestellt wird, falls die zu durchsuchende Symbolfolge und die zu suchende Symbolfolge gleich sind, eine Bedingung, bei der Übereinstimmung festgestellt wird, wenn die beiden Folgen nicht gleich sind, eine Bedingung, bei der Übereinstimmung unabhängig von der Beziehung zwischen den Folgen immer festgestellt wird, sowie eine Bedingung, bei der unabhängig von der Beziehung zwischen den Folgen immer eine Fehlübereinstimmung festgestellt wird.

15. Einrichtung nach einem der Ansprüche 6 bis 14 mit ferner einem Ausgangsanschluß oder einer Interfaceeinrichtung zum direkten Überführen des Inhalts der Bedingungshalteeinrichtung (810) an die CPU (100).

16. Einrichtung nach einem der Ansprüche 6 bis 15, wobei dann, wenn zwischen der zu durchsuchenden und der zu suchenden Symbolfolge Übereinstimmung festgestellt wird, ein Unterbrechungs-Anforderungssignal ausgegeben wird.

17. Einrichtung nach Anspruch 16, wobei die Frage, ob bei Übereinstimmung zwischen der zu durchsuchenden und der zu suchenden Symbolfolge ein Unterbrechungs-Anforderungssigal auszugeben ist oder nicht, von einem in die Funktionsdefiniereinrichtung (820) eingegebenen Befehl bestimmt wird.

18. Einrichtung nach Anspruch 16, wobei der Inhalt des Ausgangsdatenspeichers (440) entsprechend einem die Übereinstimmung angebenden Signal an die Suchergebnis-Ausgabeeinrichtung (340) ausgegeben wird, und wobei die Frage, ob ein Teil dieses Inhalts durch interne Informationen der Symbolfolgen-Sucheinrichtung zu ersetzen ist oder nicht, von einem in die Funktionsdefiniereinrichtung (820) eingegebenen Befehl bestimmt wird.

19. Einrichtung nach einem der Ansprüche 6 bis 18, wobei für jede zu suchende Symbolfolge, die in dem nach dem Inhalt adressierbaren Speicher (500) gespeichert ist, eine Maske auf die gleiche Bitstelle in Einheiten von einem oder zwei Bytes gelegt wird.

20. Einrichtung nach Anspruch 19, wobei die gleiche Bitposition, auf die die Maske in Einheiten von einem oder zwei Bytes für jede zu suchende Symbolfolge, die in dem nach dem Inhalt adressierbaren Speicher (500) gespeichert ist, gelegt wird, von einem in die Funktionsdefiniereinrichtung (820) eingegebenen Befehl bestimmt wird.

21. Einrichtung nach einem der Ansprüche 6 bis 20, wobei die CPU (100) auf den Inhalt des nach dem Inhalt adressierbaren Speichers (500), des Vergleichsbedingungsspeichers (600) und des Ausgangsdatenspeichers (440) Zugriff hat.

22. Einrichtung nach Anspruch 1, wobei die Funktionsdefiniereinrichtung (203) ein erstes Register (FDR) aufweist, in das der Befehl eingegeben wird, wobei die Daten-Ein/Ausgabeeinrichtung ein zweites Register (DIR2), in das Daten von der CPU über den Adressenbus eingegeben werden, sowie ein drittes Register (DOR) aufweist, in das das Ergebnis der Datenverarbeitung eingegeben wird, und wobei für das erste, das zweite und das dritter Register in einem Adressenraum ein Adressenplan vorliegt.

23. Einrichtung nach einem der Ansprüche 1 bis 20, wobei zu den von der CPU (100) der Funktionsdefiniereinrichtung (203) zugeführten Befehlen ein Befehl, der eine Suche nach Ein-Byte-Daten anweist, sowie ein Befehl, der eine Suche nach Zwei-Byte-Daten anweist, gehören.

**Revendications**

1. Dispositif de recherche de chaîne (200) exploitable en combinaison avec une unité centrale de traitement (CPU) (100), ledit dispositif étant connecté à la CPU (100) via un bus d'adresses et un bus de données, et comportant :

   des moyens de définition de fonction (203) pour définir une fonction du dispositif conformément à une instruction provenant de ladite CPU,
   des moyens d'entrée/sortie de données (202) pour recevoir des données via ledit bus de données et émettre le résultat d'un traitement de données,
   des moyens de traitement de données (201) pour effectuer le traitement de données sur la base d'une fonction définie par lesdits moyens de définition de fonction en utilisant des données entrées dans lesdits moyens d'entrée/sortie de données,
   et des moyens de maintien de condition (204) pour maintenir des données représentatives d'une condition interne correspondant au résultat du traitement de données.

2. Dispositif selon la revendication 1, qui est formé sur une puce unique à semi-conducteurs.

3. Dispositif selon la revendication 1, dans lequel au moins ladite CPU (100), ledit dispositif (200), et ledit bus d'adresses et ledit bus de données sont formés sur une puce unique à semi-conducteurs pour réaliser un micro-ordinateur.

4. Dispositif selon la revendication 3, comportant de plus une mémoire RAM (110) et une mémoire ROM (120) qui sont également formées sur ladite puce unique à semi-conducteurs pour réaliser ledit micro-ordinateur (10).

5. Dispositif selon l'une quelconque des revendications 1 à 4, qui est adapté pour prendre une décision concernant si une chaîne de symboles à trouver existe ou non dans une chaîne de symboles à étudier qui est constituée de symboles représentés par des codes,
   dans lequel lesdits moyens de traitement de recherche (201) sont capables d'effectuer un traitement de recherche sur la base d'une fonction définie par lesdits moyens de définition de fonction (203) en utilisant la chaîne de symboles à trouver qui est mémorisée dans lesdits moyens de traitement de recherche et la chaîne de symboles à étudier qui est entrée dans lesdits moyens d'entrée/sortie de données (202).

**6.** Dispositif selon la revendication 5, dans lequel lesdits moyens de traitement de recherche comportent

des moyens de masquage (410) pour masquer des données dans lesdits moyens d'entrée (300) en unités de un octet,

des moyens de permutation de trajets de données (420) pour effectuer une permutation de positions des données dans lesdits moyens d'entrée en unités d'un octet,

une mémoire à contenu adressable (500) pour mémoriser à l'avance une chaîne de symboles à trouver et comparer la chaîne de symboles mémorisée à trouver et la chaîne de symboles à étudier qui a été soumise à la permutation de positions par lesdits moyens de permutation de trajets de données,

une mémoire de condition de comparaison (600) pour désigner une condition pour comparer ladite mémoire à contenu adressable, c'est-à-dire quelle relation entre la chaîne de symboles à étudier et la chaîne de symboles à trouver est déterminée comme étant une correspondance,

des moyens d'analyse de résultat de comparaison (700) pour analyser le nombre de mots qui correspondent à partir du résultat de comparaison de ladite mémoire à contenu adressable,

des moyens de séparation de correspondance (430) pour émettre des signaux de correspondance des mots qui correspondent un par un,

une mémoire de données de sortie (440) dont l'adresse d'accès est désignée par ledit signal de correspondance, et

des moyens (450) de maintien de données dont l'accès a été un échec pour maintenir des données qui sont à émettre dans lesdits moyens de sortie de résultat de recherche dans le cas où on n'a pas en accès à ladite mémoire de données de sortie,

dans lequel lesdits moyens d'entrée/sortie (300) comportent des moyens de sortie de résultat de recherche (340) pour émettre le contenu de ladite mémoire de données de sortie à travers ledit bus de données, et

dans lequel lesdits moyens de maintien de condition (810) maintiennent une condition interne dudit dispositif de recherche de chaîne de symboles.

**7.** Dispositif selon la revendication 6, dans lequel lesdits moyens d'entrée (300) comporte un premier groupe de moyens d'entrée (310, 320) ayant un trajet de données allant jusqu'à ladite mémoire à contenu adressable (500) et un second groupe de moyens d'entrée (330, 340) n'ayant aucun trajet de données allant jusqu'à ladite mémoire à contenu adressable, et lesdits moyens d'entrée décalent successivement des données entrées dudit second groupe de moyens d'entrée dans ledit premier groupe de moyens d'entrée tout en les faisant passer à travers chacun des moyens d'entrée de sorte que la chaîne de symboles à étudier qui est mémorisée dans ledit premier groupe de moyens d'entrée est transférée dans ladite mémoire à contenu adressable.

**8.** Dispositif selon la revendication 7, dans lequel la quantité de décalage de la chaîne de symboles à étudier dans lesdits groupes de moyens d'entrée (310 à 340) est une quantité sélectionnée parmi un bit, un octet et deux octets.

**9.** Dispositif selon la revendication 7 ou 8, dans lequel la quantité de décalage de la chaîne de symboles à étudier dans lesdits groupes de moyens d'entrée (310 à 340) est désignée par une instruction établie dans lesdits moyens de définition de fonction (820).

**10.** Dispositif selon la revendication 7, dans lequel, lorsque la chaîne de symboles à étudier qui est mémorisée dans ledit premier groupe de moyens d'entrée (310, 320) est transférée dans ladite mémoire à contenu adressable (500), l'agencement de données est changé en unités d'un octet.

**11.** Dispositif selon la revendication 10, dans lequel la manière par laquelle le changement de l'agencement des données de la chaîne de symboles à étudier qui est mémorisée dans ledit premier groupe de moyens d'entrée (310, 320), est désignée par une instruction établie dans lesdits moyens de définition de fonction (820).

**12.** Dispositif selon l'une quelconque des revendications 6 à 11, dans lequel, lorsque la chaîne de symboles à étudier est écrite dans lesdits moyens d'entrée (310 à 340), une séquence de traitements de recherche est mise en oeuvre conformément à l'établissement par lesdits moyens de définition de fonction (820) et selon que des données mémorisées dans ladite mémoire de données de sortie (440) ou des données mémorisées dans lesdits moyens (450) de maintien de données dont l'accès a été un échec sont émises dans lesdits moyens de sortie de résultat de recherche (340).

**13.** Dispositif selon la revendication 12, dans lequel, lorsque la chaîne de symboles à étudier est écrite, des moyens d'entrée pour mettre en oeuvre la séquence de traitements de recherche établie dans lesdits moyens de définition de fonction (820), sont désignés par une instruction établie dans lesdits moyens de définition de fonction.

**14.** Dispositif selon l'une quelconque des revendications 6 à 13, dans lequel la condition de comparaison entre la chaîne de symboles à étudier et la chaîne de symboles à trouver est établie en unités de un mot pour la chaîne de symboles à étudier qui est mémorisée dans ladite mémoire à contenu adressable (500), et dans lequel ladite condition de comparaison inclut une condition sous laquelle la correspondance est déterminée dans le cas où la chaîne de symboles à étudier et la chaîne de symboles à trouver sont égales l'une à l'autre, une condition sous laquelle la correspondance est déterminée dans le cas où elles ne sont pas égales l'une à l'autre, une condition laquelle la correspondance est toujours déterminée quelle que soit la relation entre celles-ci, et une condition sous laquelle une non-correspondance est toujours déterminée quelle que soit la relation entre celles-ci.

15. Dispositif selon l'une quelconque des revendications 6 à 14, comportant de plus une borne de sortie ou des moyens d'interface pour transférer directement le contenu desdits moyens de maintien de condition (810) dans ladite CPU (100).

16. Dispositif selon l'une quelconque des revendications 6 à 15, dans lequel, dans le cas où la correspondance entre la chaîne de symboles à étudier et la chaîne de symboles à trouver est détectée, un signal de demande d'interruption est émis.

17. Dispositif selon la revendication 16, dans lequel le fait que le signal de demande d'interruption doit être émis ou non dans le cas où la correspondance entre la chaîne de symboles à étudier et la chaîne de symboles à trouver est détectée, est désigné par une instruction établie dans lesdits moyens de définition de fonction (820).

18. Dispositif selon la revendication 16, dans lequel, lorsque le contenu de ladite mémoire de données de sortie (440) est émis dans lesdits moyens de sortie de résultat de recherche (340) conformément à un signal représentatif de la correspondance, le fait qu'une partie dudit contenu doit être substituée ou non à des informations internes du dispositif de recherche de chaîne de symboles est désigné par une instruction établie dans lesdits moyens de définition de fonction (820).

19. Dispositif selon l'une quelconque des revendications 6 à 18, dans lequel un masque est établi à la même position binaire en unités d'un octet ou de deux octets pour chaque chaîne de symboles à trouver qui est mémorisée dans ladite mémoire à contenu adressable (500).

20. Dispositif selon la revendication 19, dans lequel la même position binaire à laquelle le masque est établi en unités d'un octet ou de deux octets pour chaque chaîne de symboles à trouver qui est mémorisée dans ladite mémoire à contenu adressable (500), est désignée par une instruction établie dans lesdits moyens de définition de fonction (820).

21. Dispositif selon l'une quelconque des revendications 6 à 20, dans lequel on a accès aux contenus de ladite mémoire à contenu adressable (500), de ladite mémoire de condition de comparaison (600) et de ladite mémoire de données de sortie (440) depuis ladite CPU (100).

22. Dispositif selon la revendication 1, dans lequel lesdits moyens de définition de fonction (203) comportent un premier registre (FDR) dans lequel ladite instruction est établie ; lesdits moyens d'entrée/sortie de données comportent un deuxième registre (DIR2) dans lequel les données provenant de ladite CPU sont établies via ledit bus d'adresses, et un troisième registre (DOR) dans lequel le résultat du traitement de données est établi, et

lesdits premier, deuxième et troisième registres sont mappés en terme d'adresse dans un espace d'adresses.

23. Dispositif selon les revendications 1 à 22, dans lequel des instructions à envoyer dans lesdits moyens de définition de fonction (203) depuis ladite CPU (100) comportent une instruction dirigeant la recherche pour des données d'un octet et une instruction dirigeant la recherche pour des données de deux octets.

# F I G.1

# F I G.2

# FIG.3

DATA BUS

CPU

DATA INPUT/OUTPUT SECTION

| DIR0 | DIR1 | DIR2 | DOR | CCR | FDR |

CONTROL CIRCUIT

MSKO, MSKI

PATHSEL

SEARCH PROCESSING SECTION

NHR

CONTROL SECTION

CAM | CCM | COMPARE RESULT ANALYZING CIRCUIT | PE | RAM

# FIG.4

MEMORY AREA
ADDRESS

| | |
|---|---|
| 00 | |
| 04 | |

CONTENT ADDRESSABLE MEMORY

(32 BITS x 32)

78
7C

MEMORY AREA
ADDRESS

00
02

COMPARE
CONTROL
MEMORY

(11 BITS x 32)

3C
3E

80
82

RAM
(16 BITS x 32)

BC
BE

CONTROL REGISTER
AREA ADDRESS

| | |
|---|---|
| 00 | F D R |
| 02 | D I R0 |
| 04 | D I R1 |
| 06 | D I R2 |
| 08 | N H R |
| 0A | MSK0 |
| 0C | MSK1 |
| 0E | D O R |

# F I G.5

**COMMAND FORMAT**

# FIG.6

EP 0 488 297 B1

# F I G.7

UPPER BYTE OF DIR0   LOWER BYTE OF DIR0   UPPER BYTE OF DIR1   LOWER BYTE OF DIR1

| SEL 3 | SEL 4 | SEL 5 | SEL 6 |

421   422   423   424

B0   B1   B2   B3

# F I G.8

COMPARE CONTROL MEMORY FORMAT

| ※ | | | AS | BM | B0 |  | B1 |  | B2 |  | B3 |  |
|---|---|---|----|----|----|--|----|--|----|--|----|--|
| | | | | | 1 | 0 | 1 | 0 | 1 | 0 | 1 | 0 |

DOC

※ UNUSED

FIG.9

26

# F I G.10

| | Bn (COMPARE CONDITION) | | RESULT OF COMPARING FOR ONE BYTE | RESULT OF COMPARING INCLUDING COMPARE CONDITION |
|---|---|---|---|---|
| | (INPUT) | | | (OUTPUT) |
| | M BIT | L BIT | | |
| ( Pstv ) | O | O | O | O |
| | O | O | I | I |
| ( ngty ) | O | I | O | I |
| | O | I | I | O |
| ( dntc ) | I | O | ✶ | I |
| ( invd ) | I | I | ✶ | O |

✶ : DON'T CARE INPUT

EP 0 488 297 B1

# FIG.11

COMPARE RESULT ANALYZING CIRCUIT

$$XX = \begin{cases} 0 : \text{ABSENCE OF HIT} \\ 1 : \text{PRESENCE OF HIT} \end{cases}$$

$$YY = \begin{cases} 0 : \text{ABSENCE OF MHD BLOCK INCLUDING PLURAL HITS} \\ 1 : \text{PRESENCE OF MHD BLOCK INCLUDING PLURAL HITS} \end{cases}$$

$$ZZ = \begin{cases} 1 : \text{MHD BLOCK INCLUDING SINGLE HIT IS PLURAL IN NUMBER} \\ 0 : \text{OTHER THAN THE ABOVE} \end{cases}$$

# F I G. 12

701,
703,
703,
704,

Zn

MHDn
710,
720,
730,
740,

Xn

Yn

$Xn = \begin{cases} 0 : \text{ABSENCE OF HIT} \\ 1 : \text{PRESENCE OF HIT} \end{cases}$   $Yn = \begin{cases} 0 : \text{ABSENCE OF HIT,} \\ \quad\ \ \text{OR SINGLE HIT} \\ 1 : \text{PLURAL HITS} \end{cases}$   $Zn = \begin{cases} 0 : \text{ABSENCE OF HIT,} \\ \quad\ \ \text{OR PLURAL HITS} \\ 1 : \text{SINGLE HIT} \end{cases}$

# F I G.13

## 1. THE CASE WHERE OUTO BIT INDICATES RAM OUT

|    |    | 15 | 14 | 13 | 12 | 11 | 10 | 9 | 8 | 7 | 6 | 5 | 4 | 3 | 2 | 1 | 0 |

(a)   ABSENCE OF HIT

| N H R Byte O | N H R Byte I |

(b)   PRESENCE OF HIT

| R A M Byte O | R A M Byte I |

## 2. THE CASE WHERE OUTO BIT INDICATES CODE MIX

(a)   ABSENCE OF HIT

| N H R Byte O | N H R Byte I |

(b)   PRESENCE OF HIT
(THE CASE OF ONE-BYTE, TWO-BYTE CODE CHARACTER STRING SEARCH)

| MH | SW | I F | AH | NOA | R S | R A M Byte I |

(b)   PRESENCE OF HIT
(THE CASE OF BIT PATTERN SEARCH)

| MH | SW | IF | ※ | R S | R A M Byte I |

# F I G.14

| 3 | 2 | 1 | 0 |
|---|---|---|---|

CONDITION CODE REGISTER

| h 1 | h 0 | s | p |
|-----|-----|---|---|

# F I G.15

CLOCK →

RESET →

MEMORY AREA SELECTION →

CONTROL REGISTER
AREA SELECTION →

MODULE READ →

MODULE WRITE →

DATA SIZE →

ADDRESS BUS → /8

DATA BUS → /16

POWER SOURCE →

GROUND →

200

SEARCH MODULE

→ /4 CONDITION CODE

→ WAIT

→ INTERRUPTION REQUEST

# F I G.16

# F I G.17

SEARCH PROCESSOR — 10

SCSI INTERFACE — 13

RAM — 11

ROM — 12

BUFFER — 14

15

20

30

DISK — 16

# FIG.18A PRIOR ART

```
      CPU                    DISK

┌─────────────────────────────────────────┐
│  ┌────────────────────────┐              │
│  │ REQUEST FOR DATA TRANSFER│──────→      │
│  └────────────────────────┘              │
│              ┌─────────────────────────┐ │
│         ◄────│ DATA    DATA TRANSFER   │ │
│              └─────────────────────────┘ │
│  ┌────────────────────────┐              │
│  │  COMPARE OF DATA        │──────→       │
│  └────────────────────────┘         1ST  │
└──────────────────────────────────────────┘
┌──────────────────────────────────────────┐
│                 2ND                       │
└──────────────────────────────────────────┘

┌──────────────────────────────────────────┐
│                 n-TH                      │
└──────────────────────────────────────────┘
      END                    END
```

# FIG.18B

```
      CPU                    DISK

┌────────────────────┐  KEYWORDS,
│  TRANSFER OF       │  SEARCH
│  SEARCH PARAMETERS │──CONDITIONS──→
└────────────────────┘     ┌──────────────┐
                           │ DATA SEARCH  │
                           └──────────────┘
          ┌──────────────────────────────┐
      ◄───│  NOTICE OF RESULT            │
          │  OF SEARCH                   │
┌────────────────────┐     └──────────────┘
│ REQUEST FOR TRANSFER│────────→
│ OF NECESSARY FILE   │
└────────────────────┘     ┌──────────────┐
      ◄────DATA────────────│ DATA TRANSFER│
                           └──────────────┘
      END                    END
```

EP 0 488 297 B1

# F I G.19